# EUROPEAN PATENT SPECIFICATION

(11) **EP 4 218 199 B1**
(45) Date of publication and mention of the grant of the patent: **05.08.2026**
(21) Application number: 21782926.6
(22) Date of filing: 22.09.2021
(51) Int. Cl.: H04L 9/32, H04W 4/70, H04W 12/037, H04W 12/106, H04W 12/108, H04W 88/04, H04W 76/14, H04W 12/06

(54) **TECHNIQUE FOR HEADER INTEGRITY IN A RELAYED RADIO COMMUNICATION**
TECHNIK FÜR HEADERINTEGRITÄT IN EINER WEITERGELEITETEN FUNKKOMMUNIKATION
TECHNIQUE POUR INTÉGRITÉ D'EN-TÊTE DANS UNE COMMUNICATION RADIO RELAYÉE

(30) Priority: 25.09.2020 US 202063083726 P
(43) Date of publication of application: 02.08.2023
(73) Proprietor: Telefonaktiebolaget LM Ericsson (publ), 164 83 Stockholm (SE)
(72) Inventor: ORSINO, Antonino, 02480 Kirkkonummi (FI); WANG, Min, 977 53 Luleå (SE)
(74) Representative: Murgitroyd & Company
(86) International application number: PCT/EP2021/076047
(87) International publication number: WO 2022/063815

(56) References cited:
- WO-A1-2018/233809
- WO-A1-2020/174291
- US-A1- 2019 223 078
- MEDIATEK INC (EMAIL DISCUSSION RAPPORTEUR): "Summary of [AT111-e][605][Relay] L2 Relay Mechanism", vol. RAN WG2, no. electronic; 20200817 - 20200828, 1 September 2020 (2020-09-01), XP051926267, Retrieved from the Internet <URL:https://ftp.3gpp.org/tsg_ran/WG2_RL2/TSGR2_111-e/Docs/R2-2008266.zip R2-2008266 Summary of [AT111-e][605][Relay] L2 Relay Mechanism (MediaTek).docx> [retrieved on 20200901]
- INTEL CORPORATION: "Impact on user plane protocol stack and control plane procedure for Sidelink relay", vol. RAN WG2, no. E-meeting; 20200817 - 20200828, 7 August 2020 (2020-08-07), XP051912267, Retrieved from the Internet <URL:https://ftp.3gpp.org/tsg_ran/WG2_RL2/TSGR2_111-e/Docs/R2-2007608.zip R2-2007608_SLRelay_ProtocolStack_Intel.docx> [retrieved on 20200807]
- NOKIA ET AL: "Security aspects and considerations for IAB", vol. RAN WG2, no. Athens, Greece; 20190225 - 20190301, 15 February 2019 (2019-02-15), XP051602777, Retrieved from the Internet <URL:http://www.3gpp.org/ftp/tsg%5Fran/WG2%5FRL2/TSGR2%5F105/Docs/R2%2D1901418%2Ezip> [retrieved on 20190215]

## Description

### Technical Field

The present disclosure relates to a technique for the integrity of a header in a relayed radio communication. More specifically, and without limitation, methods and devices are provided for protecting and validating the integrity of a header of a data unit in a relayed radio communication between a remote radio device and a radio access network (RAN) or a further radio device through a relay radio device.

### Background

The document WO 2020/174 291 A1 describes a technique for a first integrated access and wireless access backhaul (IAB) node for securely communicating with at least one second IAB node. A secure connection with a node of a network is established. A message is received, from the node, indicating a secure messaging protocol to use to communicate with the at least one second IAB node, the message including either one nonce or a key. A control message to be sent to the second IAB node is transformed into a secure control message using the secure messaging protocol. The secure control message is transmitted to the at least one second IAB node.

The Third Generation Partnership Project (3GPP) and the Wi-Fi Alliance specify radio access technologies such as Fourth Generation Long Term Evolution (4G LTE), Fifth Generation New Radio (5G NR) and Wi-Fi, each of which supports device-to-device (D2D) communications. For example, 3GPP has specified a sidelink (SL) for LTE and NR. The SL is also referred to as a proximity service (or PROximity-based Service, ProSe).

The D2D communication may be used to relay a data unit to or from a remote radio device (e.g., a remote UE or RM-UE), e.g., in case a relay radio device (e.g., a relay UE or RL-UE) has coverage to a 3GPP network node such as a gNB, while the remote radio device is out of coverage.

In 3GPP meeting RAN2#111-e, a layer 2 (L2) relay mechanism was discussed. The L2 relay mechanism comprises an adaptation layer. For example, as has been summarized in the 3GPP document R2-2008266 "Summary of [AT111-e][605][Relay] L2 Relay Mechanism" by MediaTek Inc. for RAN2#111-e, it has been agreed to support adaptation layer.

In addition, the information content carried in the header of the adaptation layer has been also discussed in the meeting RAN2#111-e. At least some of the information content is relevant for system security.

For example, the header may comprise identifiers or identities (IDs) for the radio devices (e.g., UEs) or radio bearers (RBs) involved in the relayed radio communication, particularly the remote UE ID and/or RB ID.

Since the adaptation layer is below the packet data convergence layer (PDCP) layer of the remote UE, based on the existing security mechanism, that is end-to-end at the PDCP layer, there may be no security protection to the header of the adaptation layer, which means that the UE ID and/or RB ID of the remote UE would have a risk to be disclosed during transmission between remote UE and gNB, especially for transmissions on the first hop, i.e., the first D2D communication within the relayed radio communication.

In this case, a malicious UE may, e.g., initiate an attack against a gNB by initiating a fake RRC connection setup or re-establishment or basically initiating a fake random access procedure. This would cause unnecessary radio resources to be wasted so that another valid UE may be therefore blocked by the gNB since there is no available resource left.

In another case, a malicious UE may transmit some fake data to the relay UE, which causes the SL channel to be congested. This would cause the remote UE to be not able to transmit data in time. Unnecessary latency would be introduced to the data transfer.

### Summary

Accordingly, there is a need for a technique that prevents misuse of information comprised in a data unit of a relayed radio communication. Particularly, there is a need for a radio communication technique that ensures the integrity of a header of such a data unit.

As to a first method aspect, a method of protecting integrity of a header of a data unit (DU) at an adaptation layer for a relayed radio communication between a remote radio device and a radio access network (RAN), or a further radio device, through a relay radio device is provided according to claim 1. The method comprises or initiates a step of obtaining (e.g., receiving), at a transmitter (TX), a DU from a transparent layer. The relayed radio communication uses a protocol stack comprising the adaptation layer below the transparent layer, wherein the transparent layer is relayed transparently at the relay radio device. The method further comprises or initiates a step of protecting, at the adaptation layer of the TX, the integrity of the header of the DU by including a token in the header of the DU at the adaptation layer, the token comprising a local temporary identifier (ID) of the remote radio device. The integrity-protected header is attached to the DU obtained from the transparent layer. The method further comprises or initiates a step of transmitting, from the TX, the DU comprising the integrity-protected header to a receiver (RX).

By protecting the integrity of the header at the adaptation layer, the security protection for the header of adaptation layer is improved. At least some embodiments can prevent that a malicious UE successfully attempts to misuse the identity of another UE or a false identity. Same or further embodiments can eliminate or reduce the effectiveness of an attack of the RAN that attempts to congest a channel between the TX and the RX, e.g., a D2D communication used for the relayed radio communication.

The technique may be implemented as a method for security protection of identities and/or identifiers (collectively or selectively abbreviated IDs) in the header, e.g., in case of a relay. The IDs may comprise an identifier or identity of any one of the TX, the RX, the RM radio device, the relay radio device and the network node. The identifier or identity of any of the radio devices may be a UE ID of the respective radio device (e.g., UE). Alternatively or in addition, the identifiers or identities may comprise an identifier or an identity of a radio bearer (RB) used by a D2D communication between the TX and the RX, e.g., as part of the relayed radio communication.

In a variant of any embodiment disclosed herein, the protecting step may be replaced by an encrypting step, e.g., in the first method aspect, optionally using the encryption step as disclosed herein. Furthermore, in a variant of any embodiment disclosed herein, the validating step may be replaced by a decrypting step, e.g., in the second method aspect, optionally using the decryption step as disclosed herein.

The relay radio device may relay a configuration message from the RAN or the further radio device to the remote radio device and/or in the other direction. The configuration message may be indicative of one or more parameters for protecting and/or validating of the integrity of the header and/or for encrypting and/or decrypting the header.

The remote radio device (e.g. UE) may be in D2D radio connection to the relay radio device (e.g., UE), which may have coverage to the RAN (e.g., a network node of the RAN, e.g., a gNB).

The header may be a layer 2 (L2) header, e.g., of an L2 relay mechanism. The L2 may comprise an adaptation layer (e.g., referred to as "adaptation relay") for relaying (e.g., receiving, transmitting and/or forwarding) data unit of the relayed radio communication. The adaptation layer may be implemented on a second hop or further hops. For example, the adaption layer may be implemented for the D2D communication between the relay UE and the RAN (e.g., network node, e.g., gNB), e.g., on the Uu link, for UE to RAN relay. Alternatively or in addition, the adaption layer may be implemented for the D2D communication between the relay UE and the receiving remote UE, e.g., on the PC5 link, for UE to UE relay. Optionally, the adaptation layer may be implemented on the first hop.

An information content carried in the header of adaptation layer may comprise the information content for the header discussed in the 3GPP meeting RAN2#111-e. Alternatively or in addition, the header may comprise at least one of the following items (e.g., for UE to network relay):
A first item comprises an identity (or identifier, ID) of the remote UE, e.g., known by the RAN (e.g., the gNB) and/or by the relay UE. The first item may be a remote UE ID or a local ID.
A second item comprises an identity (or identifier, ID) of an End-to-End Remote UE RB.

Alternatively or in addition, the header may comprise at least one of the following items (e.g., for UE to UE relay):
A third item comprises an identity (or identifier, ID) of the remote UE, e.g., known by a peer remote UE and/or by the relay UE. The third item may be a remote UE ID or a local ID.
A fourth item comprises an identity (or identifier, ID) of End-to-End Remote UE SL RB.

The first method aspect may be implemented alone or in combination with any one of the claims, particularly the claims 1 to 8.

As to a second method aspect, a method of validating integrity of a header of a data unit (DU) at an adaptation layer for a relayed radio communication between a remote radio device and a radio access network (RAN), or a further radio device, through a relay radio device is provided according to claim 9. The method comprises or initiates a step of receiving, from a transmitter (TX) the DU comprising an integrity-protected header at a receiver (RX). The integrity-protected header includes a token in the header of the DU at the adaptation layer. The token comprises a local temporary identifier (ID) of the remote radio device. The method further comprises or initiates a step of validating, at the adaptation layer of the RX, the integrity of the integrity-protected header of the DU. The integrity-protected header is detached from the DU received from the TX. The method further comprises or initiates a step of providing, at the RX, the DU to a transparent layer. The relayed radio communication uses a protocol stack comprising the adaptation layer below the transparent layer, wherein the transparent layer is relayed transparently at the relay radio device.

The detaching or the header and/or the providing of the DU may performed if (e.g., only if) a result of the step of validating the header comprises the validity of the header or the validity of the DU.

The second method aspect may be implemented alone or in combination with any one of the claims, particularly the claims 9 to 12.

The second method aspect may further comprise any feature, or may comprise or initiate any step, disclosed in the context of the first method aspect or may comprise a feature or step corresponding thereto. For example, the relay radio device may transmit a capability message indicating that the relay radio device is capable of relaying an allocation of radio resources and/or is capable of sharing allocated radio resources to RAN, and the RAN may receive the corresponding capability message from the relay radio device.

Moreover, the first method aspect may be performed at or by a transmitting station (briefly: transmitter), e.g., a base station for a downlink or a radio device for an uplink or a sidelink connection. Alternatively, or in combination, the second method aspect may be performed at or by a receiving station (briefly: receiver), e.g., a base station for an uplink or a radio device for a downlink or a sidelink connection.

The channel or link used for the data transmission and the radio reception, i.e., the channel between the transmitter and the receiver may comprise multiple subchannels or subcarriers (as a frequency domain). Alternatively, or in addition, the channel or link may comprise one or more slots for a plurality of modulation symbols (as a time domain). Alternatively, or in addition, the channel or link may comprise a directional transmission (also: beamforming transmission) at the transmitter, a directional reception (also: beamforming reception) at the receiver or a multiple-input multiple-output (MIMO) channel with two or more spatial streams (as a spatial domain).

The transmitter and the receiver may be spaced apart. The transmitter and the receiver may be in data or signal communication exclusively by means of the radio communication, e.g., the D2D communication.

In a first embodiment of any aspect, a security mechanism is introduced (e.g., according to the protecting step and/or the validating step) to provide integrity protection of the header of the adaptation layer. For example, a field to carry a token (e.g., an authentication code) is included in the header of the DU, which is integrity protected.

The technique may be implemented separately for a hop between a remote UE and a relay UE and a hop between a relay UE and the RAN (e.g., the network node, e.g., gNB) (for U2N relay) or a receiving remote UE (for U2U relay).

Any of the first and/or second method aspect may be implemented at any one of the network node at the RAN, the further radio device, the remote radio device and/or the relay radio device. For example, the remote radio device may implement each of the first and second aspects for a bidirectional communication on the relayed radio device. Alternatively or in addition, the relay radio device may implement each of the first and second aspects for forwarding the DU.

For a hop which is being integrity protected, the hop includes at least one transmitter node (TX) and one receiver node (RX), each node may be e.g., a gNB or a UE.

A security token may be provided to the receiving node in an encrypted message (e.g., RRC or PC5-S), e.g., the configuration message. The receiving node stores this security token. This token may be configured by the RAN (e.g., gNB). Alternatively or in addition, the token may be configured by a coordinator UE, e.g., which is a UE node operating a coordinator in a proximity. Alternatively or in addition, the token is configured by an application server.

In any embodiment, the token (e.g., the configured token) is configured or transmitted to any one of the devices or the network nodes in a secured way (e.g., in encrypted RRC messages). For a hop out of network coverage, the token can be preconfigured or configured to nodes when nodes are in coverage.

In any embodiment, in every adaptation layer PDU transmitted from a transmitter node to a receiver node, a security token may be included to integrity-protect the adaptation layer header.

In any embodiment, the receiver node RX may validate a received security token in an authorization check. As part of the authorization check, it compares the security token in the received adaptation header with the token stored by the node.

The receiver node RX may only process reception of a DU (e.g., PDU) of the adaptation layer, if the adaption layer header of the PDU does contain the same security token as the one stored by the RX.

In the second embodiment, the integrity protection function including both integrity protection and integrity verification is performed in adaptation layer, if configured.

For a PDU of adaptation layer, it is the PDU header that is integrity protected. The data part of the PDU is not to be protected, since it is already protected at the upper layer (i.e., PDCP layer). As a correspondence, a field to carry the token/authentication code which is computed by the integrity protection algorithm needs to be included in the PDU which is integrity protected.

The integrity protection algorithm and keys to be used by adaptation layer entity are configured by the gNB. Alternatively, they are configured by a coordinator UE node which a UE node operating a coordinator in a proximity. Alternatively, they are configured by an application server. The configurations are signaled to nodes in an encrypted message (e.g., RRC or PC5-S). The integrity protection function is activated/suspended/resumed by upper layers (e.g., RRC, PC5-RRC, or PC5-S). With this embodiment, we are basically proposing a new and additional end-to-end security framework at the adaptation layer (i.e., this is going to complement the existing security framework at the PDCP layer).

For integrity protection and verification, at least one of the below parameters is required by adaptation layer for header integrity protection
1) a counter value indicating the sequence number of the PDU of adaptation layer
2) RB bearer identity (e.g., End-to-End Remote UE RB for UE to network relay or End-to-End Remote UE SL RB for UE to UE relay)
3) direction of the transmission (i.e., from a transmitter node to a receiver node or vice versa.)
4) integrity protection KEY.

In the third embodiment, same as the second embodiment, the ciphering function (including ciphering and deciphering) introduced for adaptation layer. if the ciphering function is configured, it is the token field and the header of adaptation layer that is ciphered. The data part of the PDU is not to be protected, since it is already protected at the upper layer (i.e., PDCP layer). The same parameters as in the second embodiment are also required by adaptation layer for the ciphering function.

In the sixth embodiment, a remote UE in a hop may be allocated with a local temporary ID by the gNB. Alternatively, it is configured by a coordinator UE node which a UE node operating a coordinator in a proximity. Alternatively, it is configured by an application server. The configurations are signaled to nodes in an encrypted message (e.g., RRC or PC5-S). In order to minimize the risk of disclosure of the UE ID in adaptation layer, this temporary local ID is carried in adaptation layer for indicating the PDU is transmitted by whom. In addition, the remote UE is configured that a temporary ID is only valid for a given time period (or a given number of transmissions or a given number of PDUs which are transmitted).

In any aspect, the transmitter and the receiver may form, or may be part of, a radio network, e.g., according to the Third Generation Partnership Project (3GPP) or according to the standard family IEEE 802.11 (Wi-Fi). The radio network may be a radio access network (RAN) comprising one or more base stations. Alternatively, or in addition, the radio network may be a vehicular, *ad hoc* and/or mesh network. The first method aspect may be performed by one or more embodiments of the transmitter in the radio network. The second method aspect may be performed by one or more embodiments of the receiver in the radio network.

Any of the radio devices may be a mobile or wireless device, e.g., a 3GPP user equipment (UE) or a Wi-Fi station (STA). The radio device may be a mobile or portable station, a device for machine-type communication (MTC), a device for narrowband Internet of Things (NB-loT) or a combination thereof. Examples for the UE and the mobile station include a mobile phone, a tablet computer and a self-driving vehicle. Examples for the portable station include a laptop computer and a television set. Examples for the MTC device or the NB-loT device include robots, sensors and/or actuators, e.g., in manufacturing, automotive communication and home automation. The MTC device or the NB-loT device may be implemented in a manufacturing plant, household appliances and consumer electronics.

Any of the radio devices may be wirelessly connected or connectable (e.g., according to a radio resource control, RRC, state or active mode) with any of the base stations. Herein, the base station may encompass any station that is configured to provide radio access to any of the radio devices. The base stations may also be referred to as transmission and reception point (TRP), radio access node or access point (AP). The base station or one of the radio devices functioning as a gateway (e.g., between the radio network and the RAN and/or the Internet) may provide a data link to a host computer providing the data. Examples for the base stations may include a 3G base station or Node B, 4G base station or eNodeB, a 5G base station or gNodeB, a Wi-Fi AP and a network controller (e.g., according to Bluetooth, ZigBee or Z-Wave).

The RAN may be implemented according to the Global System for Mobile Communications (GSM), the Universal Mobile Telecommunications System (UMTS), 3GPP Long Term Evolution (LTE) and/or 3GPP New Radio (NR).

Any aspect of the technique may be implemented on a Physical Layer (PHY), a Medium Access Control (MAC) layer, a Radio Link Control (RLC) layer and/or a Radio Resource Control (RRC) layer of a protocol stack for the radio communication.

As to another aspect, a computer program product is provided. The computer program product comprises program code portions for performing any one of the steps of the method aspect disclosed herein when the computer program product is executed by one or more computing devices. The computer program product may be stored on a computer-readable recording medium. The computer program product may also be provided for download, e.g., via the radio network, the RAN, the Internet and/or the host computer. Alternatively, or in addition, the method may be encoded in a Field-Programmable Gate Array (FPGA) and/or an Application-Specific Integrated Circuit (ASIC), or the functionality may be provided for download by means of a hardware description language.

A first device aspect is provided according to the claim 13. Furthermore, the first device aspect may be provided or implemented alone or in combination with any one of the embodiments described herein below.

The device may be configured to perform any one of the steps of the first method aspect.

A second device aspect is provided according to the claim 15. Furthermore, the second device aspect may be provided or implemented alone or in combination with any one of the embodiments described herein below.

The device may be configured to perform any one of the steps of the second method aspect.

As to a still further aspect a communication system including a host computer is provided. The host computer may comprise a processing circuitry configured to provide user data, e.g., depending on the location of the UE determined in the locating step. The host computer may further comprise a communication interface configured to forward user data to a cellular network for transmission to a user equipment (UE), wherein the UE comprises a radio interface and processing circuitry, a processing circuitry of the cellular network being configured to execute any one of the steps of the first and/or second method aspect.

The communication system may further include the UE. Alternatively, or in addition, the cellular network may further include one or more base stations and/or gateways configured to communicate with the UE and/or to provide a data link between the UE and the host computer using the first method aspect and/or the second method aspect.

The processing circuitry of the host computer may be configured to execute a host application, thereby providing the user data and/or any host computer functionality described herein. Alternatively, or in addition, the processing circuitry of the UE may be configured to execute a client application associated with the host application.

Any one of the devices, the UE, the base station, the system or any node or station for embodying the technique may further include any feature disclosed in the context of the method aspects, and *vice versa.* Particularly, any one of the units and modules, or a dedicated unit or module, may be configured to perform or initiate one or more of the steps of the method aspect.

### Brief Description of the Drawings

Further details of embodiments of the technique are described with reference to the enclosed drawings, wherein:
- Fig. 1A: shows an example schematic block diagram of an embodiment of device for protecting integrity of a header of a data unit at an adaptation layer for a relayed radio communication;
- Fig. 1B: shows an example schematic block diagram of an embodiment of device for validating integrity of a header of a data unit at an adaptation layer for a relayed radio communication;
- Fig. 2A: shows an example flowchart for a method of protecting integrity of a header of a data unit at an adaptation layer for a relayed radio communication, which method may be implementable by the device of Fig. 1A;
- Fig. 2B: shows an example flowchart for a method of validating integrity of a header of a data unit at an adaptation layer for a relayed radio communication, which method may be implementable by the device of Fig. 1B;
- Fig. 3: shows an example deployment scenario for a relayed radio communication;
- Fig. 4: schematically shows a physical resource grid of a 3GPP NR implementation;
- Fig. 5: schematically illustrates an architecture of a relayed radio communication using a RL device, e.g. as the device of Fig. 1;
- Fig. 6: schematically illustrates examples of protocol stacks for a L3 remote radio device-to-network relay;
- Fig. 7: schematically illustrates an example of a RM radio device to network relay;
- Fig. 8: schematically illustrates a user plane stack for an L2 RL radio device, the RAN and/or a further radio device and an RM radio device embodying the devices of Fig. 1A, 1B and 1C, respectively;
- Fig. 9: schematically illustrates a control plane stack for an L2 RL radio device, the RAN and/or a further radio device and an RM radio device embodying the devices of Fig. 1A, 1B and 1C, respectively;
- Fig. 10: schematically illustrates a connection establishment for a relayed radio connection for an RL radio device, the RAN and/or a further radio device and an RM radio device embodying the devices of Fig. 1A, 1B and 1C, respectively;
- Fig. 11: schematically illustrates an example of a configuration message from a RAN forwarded through a RL radio device to two RM radio devices each embodying the device of any one of Figs. 1A and 1B;
- Fig. 12: schematically illustrates a further example of a configuration message from a RAN forwarded through a RL radio device to two RM radio devices embodying the device of any one of Figs. 1A and 1B;
- Fig. 13A: shows an example schematic block diagram of a RL radio device embodying the device of any one of Figs. 1A and 1B;
- Fig. 13B: shows an example schematic block diagram of a network node embodying the device of any one of Figs. 1A and 1B;
- Fig. 13C: shows an example schematic block diagram of a RL radio device embodying the device of any one of Figs. 1A and 1B;
- Fig. 14: schematically illustrates an example telecommunication network connected via an intermediate network to a host computer;
- Fig. 15: shows a generalized block diagram of a host computer communicating via a base station or radio device functioning as a gateway with a user equipment over a partially wireless connection; and
- Figs. 16 and 17: show flowcharts for methods implemented in a communication system including a host computer, a base station or radio device functioning as a gateway and a user equipment.

### Detailed Description

In the following description, for purposes of explanation and not limitation, specific details are set forth, such as a specific network environment in order to provide a thorough understanding of the technique disclosed herein. It will be apparent to one skilled in the art that the technique may be practiced in other embodiments that depart from these specific details. Moreover, while the following embodiments are primarily described for a New Radio (NR) or 5G implementation, it is readily apparent that the technique described herein may also be implemented for any other radio communication technique, including 3GPP LTE (e.g., LTE-Advanced or a related radio access technique such as MulteFire), in a Wireless Local Area Network (WLAN) according to the standard family IEEE 802.11, for Bluetooth according to the Bluetooth Special Interest Group (SIG), particularly Bluetooth Low Energy, Bluetooth Mesh Networking and Bluetooth broadcasting, for Z-Wave according to the Z-Wave Alliance or for ZigBee based on IEEE 802.15.4.

Moreover, those skilled in the art will appreciate that the functions, steps, units and modules explained herein may be implemented using software functioning in conjunction with a programmed microprocessor, an Application Specific Integrated Circuit (ASIC), a Field Programmable Gate Array (FPGA), a Digital Signal Processor (DSP) or a general purpose computer, e.g., including an Advanced RISC Machine (ARM). It will also be appreciated that, while the following embodiments are primarily described in context with methods and devices, the invention may also be embodied in a computer program product as well as in a system comprising at least one computer processor and memory coupled to the at least one processor, wherein the memory is encoded with one or more programs that may perform the functions and steps or implement the units and modules disclosed herein.

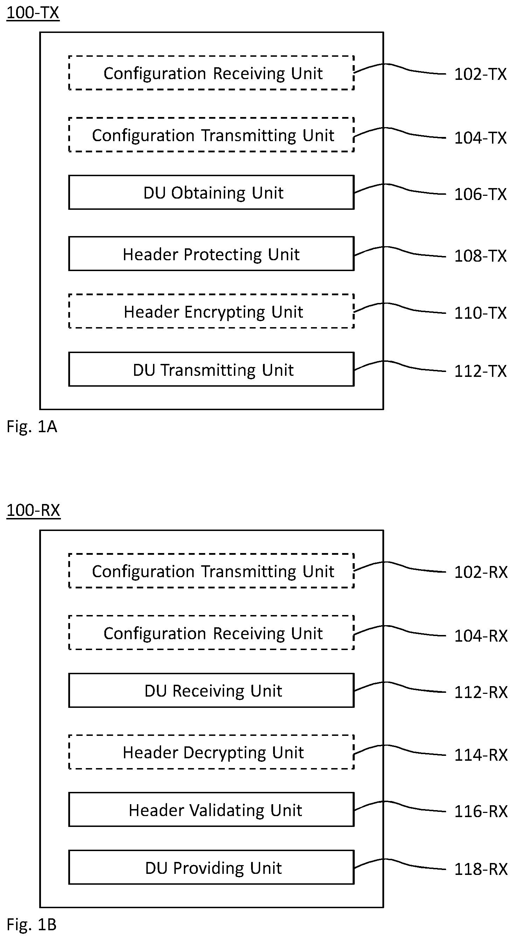

Fig. 1A schematically illustrates an example block diagram of a device according to the first device aspect. The device is generically referred to by reference sign 100-TX.

The device 100-TX may comprise any one of the units 106-TX, 108-TX and 112-TX for performing the steps labelled 206-TX, 208-TX and 212-TX, respectively, preferably according to the claims or any embodiment disclosed herein.

The device 100-TX optionally comprises any one of the units 102-TX, 104-TX and 110-TX for performing the steps labelled 102-TX, 104-TX and 110-TX, respectively, preferably according to the claims or any embodiment disclosed herein.

Any of the units of the receiving device 100-TX may be implemented by modules configured to provide the corresponding functionality.

The device 100-TX may also be referred to as, or may be embodied by, a RL radio device (e.g., RL-UE or labelled 100-RL), a RM radio device (e.g., RM-UE or labelled 100-RM) and/or a network node (NN or labelled 100-NN). The device 100-TX and the RX (e.g., the RAN (e.g. a network node of the RAN) or the further radio device) are in a radio communication (preferably D2D communication or Uu) at least for the transmission of the DU.

Fig. 1B schematically illustrates an example block diagram of a device according to the second device aspect. The device is generically referred to by reference sign 100-RX.

The device 100-RX may comprise any one of the units 112-RX, 116-RX and 118-RX for performing the steps labelled 212-RX, 216-RX and 218-RX, respectively, preferably according to the claims or any embodiment disclosed herein.

The device 100-TX optionally comprises any one of the units 102-RX, 104-RX and 114-RX for performing the steps labelled 202-RX, 204-RX and 214-RX, respectively, preferably according to the claims or any embodiment disclosed herein.

Any of the units of the receiving device 100-RX may be implemented by modules configured to provide the corresponding functionality.

The device 100-RX may also be referred to as, or may be embodied by, a RL radio device (e.g., RL-UE or labelled 100-RL), a RM radio device (e.g., RM-UE or labelled 100-RM) and/or a network node (NN or labelled 100-NN). The device 100-RX and the TX (e.g., the RAN (e.g. a network node of the RAN) or the further radio device) are in a radio communication (preferably D2D communication or Uu) at least for the reception of the DU.

The technique may be applied to uplink (UL), downlink (DL) or direct communications between radio devices, e.g., device-to-device (D2D) communications or sidelink communications.

Each of the device 100-RL, the device 100-NN, and the device 100-RM may be a radio device and/or a network node (e.g., a base station). Herein, any radio device may be a mobile or portable station and/or any radio device wirelessly connectable to the network node (e.g., a base station) and/or the RAN, or to another radio device. A radio device may be a user equipment (UE), a device for machine-type communication (MTC) or a device for (e.g., narrowband) Internet of Things (IoT). Two or more radio devices may be configured to wirelessly connect to each other, e.g., in an *ad hoc* radio network or via a 3GPP sidelink connection. Furthermore, any base station may be a station providing radio access, may be part of a radio access network (RAN) and/or may be a node connected to the RAN for controlling radio access. Further a base station may be an access point, for example a Wi-Fi access point.

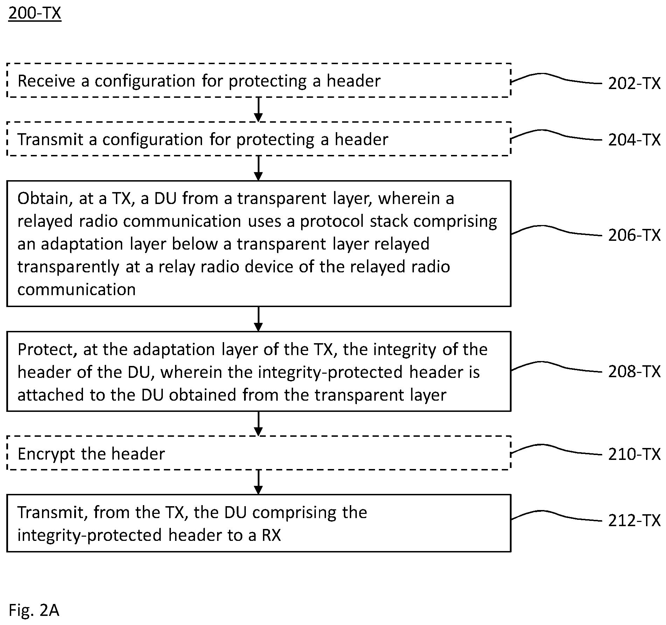

Fig. 2A shows an example flowchart for a method 200-TX according to the first method aspect in the claims.

The method 200-TX may be performed by the device 100-TX. For example, the units 102-TX, 104-TX, 106-TX, 108-TX, 110-TX, and 112-TX may perform the steps 202-TX, 204-TX, 206-TX, 208-TX, 210-TX, and 212-TX, respectively.

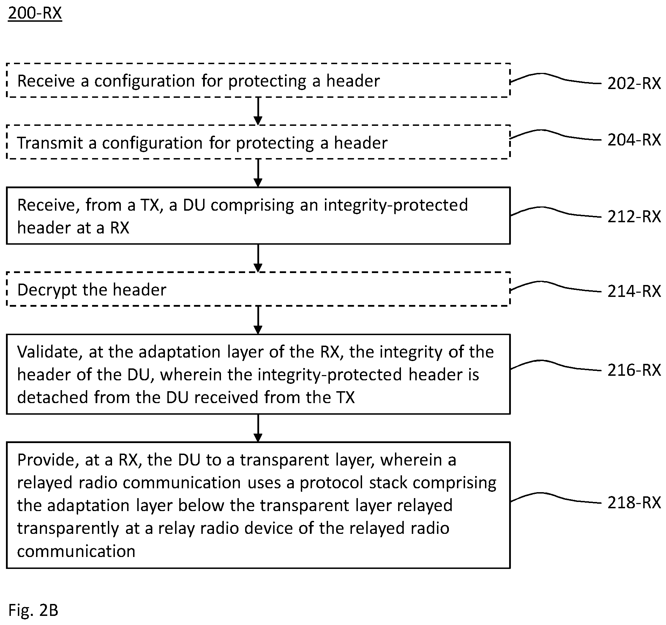

Fig. 2B shows an example flowchart for a method 200-RX according to the second method aspect in the claims.

The method 200-RX may be performed by the device 100-RX. For example, the units 102-RX, 104-RX, 112-RX, 114-RX, 116-RX, and 118-RX may perform the steps 202-RX, 204-RX, 212-RX, 214-RX, 216-RX, and 218-RX, respectively.

As to a first method aspect, a method of protecting integrity of a header of a data unit (DU) at an adaptation layer for a relayed radio communication between a remote radio device and a radio access network (RAN), or a further radio device, through a relay radio device is provided. The method comprises or initiates a step of obtaining, at a transmitter (TX), a DU from a transparent layer. The relayed radio communication uses a protocol stack comprising the adaptation layer below the transparent layer that is relayed transparently at the relay radio device. The method further comprises or initiates a step of protecting, at the adaptation layer of the TX, the integrity of the header of the DU. The integrity protected header is attached to the DU obtained from the transparent layer. The method further comprises or initiates a step of transmitting, from the TX, the DU comprising the integrity protected header to a receiver (RX).

Protecting, at the adaptation layer of the TX, the integrity of the header of the DU by including a token in the header of the DU at the adaptation layer means that the protecting comprises including a token in the header of the DU at the adaptation layer.

The local temporary identifier (which may also be written as local, temporary identifier or as local and temporary identifier) may also be referred to as temporary local identifier (which may also be written as temporary, local identifier or temporary and local identifier).

The step of protecting the integrity of the header may be referred to as integrity-protecting the header or protecting the header or protecting step. The header resulting from the protecting step may be referred to as integrity-protected header.

The step of protecting the integrity of the header at the adaptation layer may comprise generating, modifying and/or extending the header at the adaption layer. The protecting step may use an integrity protection algorithm.

The technical effect of the protecting step performed at the adaptation layer may extend beyond the adaptation layer and/or may relate to the transmitting of the DU comprising the integrity protected header at the TX and/or the receiving of the DU comprising the integrity protected header at the RX and/or the radio propagation of the DU comprising the integrity protected header between the TX and the RX.

The transmitting of the DU and the receiving of the DU may be referred to as a hop of the relayed radio communication.

The transmitting may comprise a radio transmission. The DU comprising the integrity protected header may be transmitted from the TX to the RX using a device-to-device (D2D) radio communication. The D2D radio communication may be a direct radio communication or a peer-to-peer radio communication, e.g., a sidelink (SL) according to 3GPP LTE or 3GPP NR or a peer-to-peer radio communication according to Wi Fi direct.

The D2D communication may be terminated at the RX and/or the TX.

The DU comprising the (e.g., integrity-protected) header may be a packet data unit (PDU) of the adaptation layer. Alternatively or in addition, the adaptation layer (e.g., at the relay radio device) may be configured to relay the DU.

The DU as obtained from the transparent layer may be a packet data unit (PDU) of the transparent layer or a service data unit (SDU) of the adaptation layer.

The TX and the RX may form or span one leg (e.g., a section) and/or one hop of the relayed radio communication.

The DU received at the adaptation layer of the TX may comprise a packet data unit, PDU, from the transparent layer (e.g., the packet data convergence protocol, PDCP, layer at the TX).

The transparent layer may be higher in the protocol stack than the adaptation layer.

Integrity protecting the header of the DU at the adaptation layer of the TX may comprise applying an integrity protection algorithm to the header which is prefixed, at the adaptation layer, to the DU received from the transparent layer.

The DU received from the transparent layer at the adaptation layer may also be denoted as "transparent layer DU" or "transparent layer PDU". Alternatively or in addition, the DU comprising the integrity protected header from the adaptation layer for transmission to the RX may also be denoted as "adaptation layer DU" or "adaptation layer PDU". An adaptation layer DU may comprise the result of a segmentation and/or concatenation of one or more transparent layer DUs.

The integrity protected header of the adaptation layer DU may further be ciphered for transmission. Alternatively or in addition, the adaptation layer DU, comprising the integrity protected header and the transparent layer DU, may be ciphered for transmission.

By integrity protecting the header of the application layer DU, a security of the relayed radio communication may be improved. Alternatively or in addition, a waste of radio resources (e.g., overloading the available bandwidth and/or channel) may be avoided. Further alternatively or in addition, fake and/or malicious connections to any one of the devices within the relayed radio communication may be avoided.

The further radio device may be a further remote radio device.

The transparent layer (e.g., according to the first or second method aspect) may comprise a packet data convergence protocol (PDCP) layer.

The DU (e.g., according to the first or second method aspect) may comprise a packet data unit (PDU).

The method (e.g., according to the first method aspect) may further comprise or initiate the step of transmitting, from the TX to the RX, a configuration message. Alternatively or additionally, the configuration message may be indicative of at least one of a configuration of the protecting and/or one or more parameters of the protecting and/or a token of the protecting. Alternatively or additionally, the configuration message may be indicative that the adaptation layer of the TX is capable of performing the protecting.

The configuration message may be transmitted to a central unit (e.g., another radio device) and/or the RAN (e.g., the network node of the RAN) and/or the further radio device.

The configuration message may be encrypted. Alternatively or in addition, the token (e.g., as comprised in the configuration message and/or in the header) may be encrypted.

The token may be included in the header. The header as generated by the adaptation layer may be integrity-protected by including the token in the header. The token may be an additional field in the header.

The protecting (e.g., according to the first method aspect) may comprise or initiate including a token in the header of the DU at the adaptation layer. Alternatively or additionally, the configuration message may comprise or be indicative of the token.

By including the token (e.g., rather than replacing the information content of the header by the token), the technique may be backward or forward compatible to an adaptation layer requiring the information content clear or unencrypted.

The method (e.g., according to the first method aspect) may further comprise or initiate, preferably at the adaptation layer, generating the token based on at least one of a key, the identity of the TX, the identity of the RX, the identifier of a radio bearer, and one or more parameters of the protecting.

The token (e.g., according to the first or second method aspect) may be a hash value of at least one of the key, the identity of the TX, the identity of the RX, the identifier of a radio bearer, and the one or more parameters of the protecting.

The token can be a hash value of the IDs.

The token or the one or more parameters (e.g., according to the first or second method aspect) may comprise at least one of a sequence number of the DU at the adaptation layer; a radio bearer (RB) identity; a temporary local identifier (ID) of the remote radio device; a direction of transmission of the DU; and an integrity protection key.

The encrypted token may also be referred to as encrypted signal, encrypted symbol, and/or authentication code. The encrypted token may comprise an integer value, an enumerated value and/or a sequence including different fields.

The encrypted token may be transmitted once upon establishment of a leg of the relayed radio connection comprising the TX and the RX.

At least one of the integrity-protection, the integrity-protected header, and the token (e.g., according to the first or second method aspect) may have a limited validity and/or be valid for at least one of: a predefined time period, a predefined number of integrity protected headers of DUs at the adaptation layer, and a predefined number of transmissions of one or more DUs.

Upon exceeding the predefined limit (e.g., the time or number), the step of validating may be negative (i.e., the token and/or the header and/or the DU is invalid).

The predefined time period may be monitored using a (e.g., dedicated) timer.

Alternatively or in addition, the predefined time period may comprise a predefined number of transmission opportunities.

The predefined number of transmission of one or more DUs may, e.g., comprise only initial transmissions. Alternatively or in addition, the predefined number of transmissions of one or more DUs may comprise a (e.g., predefined number of) retransmissions of the one or more DUs.

Each of the predefined number of transmission opportunities, the predefined number of transmissions of one or more DUs, and the predefined number of integrity protected headers of DUs at the adaptation layer may be monitored using a (e.g., dedicated) counter.

The integrity protecting (e.g., according to the first method aspect) may be configured by a central unit of the relayed radio communication, the RAN or the further radio device.

The central unit may comprise a network node. Alternatively or in addition, the central unit may comprise a radio device (e.g., a radio device coordinating the relayed radio communication). Further alternatively or in addition, the central unit may comprise an application server (e.g., of the RAN).

The method (e.g., according to the first method aspect) may further comprises or initiates the step of cyphering the header. Alternatively or additionally, cyphering at least the integrity-protected header.

The cyphering may only comprise the header of DU at the adaptation layer. Alternatively, the cyphering may comprise the entire DU at the adaptation layer.

The method (e.g., according to the first method aspect) may further comprise or initiate the step of receiving, at the TX from the RX, a configuration message. Alternatively or additionally, the configuration message may be indicative of at least one of a configuration of the protecting and/or one or more parameters of the protecting and/or a token of the protecting. Alternatively or additionally, the configuration message may be indicative that an adaptation layer of the RX is capable of validating at least one of the token, the header and the DU.

The configuration message may be indicative of the RX capability of integrity protection at the adaptation layer.

The one or more parameters (e.g., according to the first or second method aspect) may be configured by the RAN, optionally via Uu RRC. Alternatively or additionally, Uu RRC may be signaled via the relay UE.

Configuring the one or more parameters may comprise the receiving of the configuration message indicative of the one or more parameters.

As to a second method aspect, a method of validating integrity of a header of a data unit (DU) at an adaptation layer for a relayed radio communication between a remote radio device and a radio access network (RAN), or a further radio device, through a relay radio device is provided. The method comprises or initiates the step receiving, from a transmitter (TX), the DU comprising an integrity protected header at a receiver (RX). The method further comprises or initiates a step of validating, at the adaptation layer of the RX, the integrity of the integrity protected header of the DU. The integrity protected header is detached from the DU received from the TX. The method further comprises or initiates a step of providing, at the RX, the DU to a transparent layer. The relayed radio communication uses a protocol stack comprising the adaptation layer below the transparent layer that is relayed transparently at the relay radio device.

The method (e.g., according to the second method aspect) may further comprise or initiate the step of decrypting the header. Optionally, the header may be decrypted before or after validating the header.

Decrypting may comprise decoding and/or de-cyphering.

The at least one of the steps of providing, detaching, and decrypting (e.g., according to the second method aspect) may be selectively performed. Alternatively or additionally, responsive to a result of the validating, if the result is indicative of the validity of the header.

The providing, detaching, and decrypting may be performed selectively, if the validation was successful.

The method (e.g., according to the second method aspect) may further comprising or initiating the step of discarding the DU if the validation is negative.

The method (e.g., according to the second method aspect) may further comprise or initiate the step of receiving, from the TX at the RX, a configuration message. Alternatively or additionally, the configuration message may be indicative of at least one of a configuration of the validating and/or one or more parameters of the validating and/or a token of the validating. Alternatively or additionally, the configuration message may be indicative that the adaptation layer of the TX is capable of performing the protecting.

The method (e.g., according to the second method aspect) may further comprise or initiate the step of transmitting, from the RX to the TX, a configuration message. Alternatively or additionally, the configuration message may be indicative of at least one of a configuration of the validating and/or one or more parameters of the validating and/or a token of the validating. Alternatively or additionally, the configuration message may be indicative that an adaptation layer of the RX is capable of validating at least one of the token, the header and the DU.

The validating (e.g., according to the second method aspect) may comprise or initiate comparing a configured token and a token included in the header.

The result of the validating may be positive if the compared tokens are equal. The configured token may be preconfigured or received in the configuration message.

The method (e.g., according to the second method aspect) may further comprise or initiate the steps and/or features of any one of the first method aspect or steps and/or features corresponding thereto.

As to another aspect, a computer program product comprising program code portions for performing the steps of any one first and/or second method aspect is provided. The computer program product is executed on one or more computing devices. Alternatively or additionally, the computer program product stored on a computer-readable recording medium.

As to a first device aspect, a device for protecting integrity of a header of a data unit (DU) at an adaptation layer for a relayed radio communication between a remote radio device and a radio access network (RAN) or a further radio device through a relay radio device is provided. The device is configured to obtain, at a transmitter (TX), a DU from a transparent layer. The relayed radio communication uses a protocol stack comprising the adaptation layer below the transparent layer that is relayed transparently at the relay radio device. The device is further configured to protect, at the adaptation layer of the TX, the integrity of the header of the DU. The integrity protected header is attached to the DU obtained from the transparent layer. The device is further configured to transmit, from the TX, the DU comprising the integrity protected header to a receiver (RX).

The device (e.g., according to the first device aspect) may further configured to perform the steps of any one of the first method aspect.

As to a second device aspect, a device for validating integrity of a header of a data unit (DU) at an adaptation layer for a relayed radio communication between a remote radio device and a radio access network (RAN), or a further radio device through a relay radio device is provided. The device is configured to receive, from a transmitter (TX), the DU comprising an integrity protected header at a receiver (RX). The device is further configured to validate, at the adaptation layer of the RX, the integrity of the integrity protected header of the DU. The integrity protected header is detached from the DU received from the TX. The device is further configured to provide, at the RX, the DU to a transparent layer. The relayed radio communication uses a protocol stack comprising the adaptation layer below the transparent layer that is relayed transparently at the relay radio device.

The device (e.g., according to the second device aspect) may further be configured to perform the steps of the second method aspect.

The device according to the first device aspect and/or the second device aspect may be a base station configured to communicate with a user equipment (UE). The base station may comprise a radio interface and processing circuitry configured to execute the steps of any one of the first and/or second method aspects.

A device according to the first device aspect and/or the second device aspect may be a user equipment (UE). The UE may be configured to communicate with a base station or radio device functioning as a gateway. The UE may comprise a radio interface and processing circuitry configured to execute the steps of any one of the first and/or second method aspects.

As to a still further device aspect, a communication system including a host computer is provided. The host computer comprises processing circuitry configured to provide user data and a communication interface configured to forward user data to a cellular or ad hoc radio network for transmission to a user equipment (UE). The UE comprises a radio interface and processing circuitry. The processing circuitry of the UE is configured to execute the steps of any one of the first and/or second method aspects.

The communication system (e.g., according to the still further device aspect) may further include the UE.

The radio network (e.g., according to the fourth device aspect) may further comprise a base station, or a radio device functioning as a gateway, configured to communicate with the UE and to perform the steps of any one of the first and/or the second method aspects.

The processing circuitry (e.g., according to the still further device aspect) of the host computer may be configured to execute a host application, thereby providing the user data. The processing circuitry of the UE may be configured to execute a client application associated with the host application.

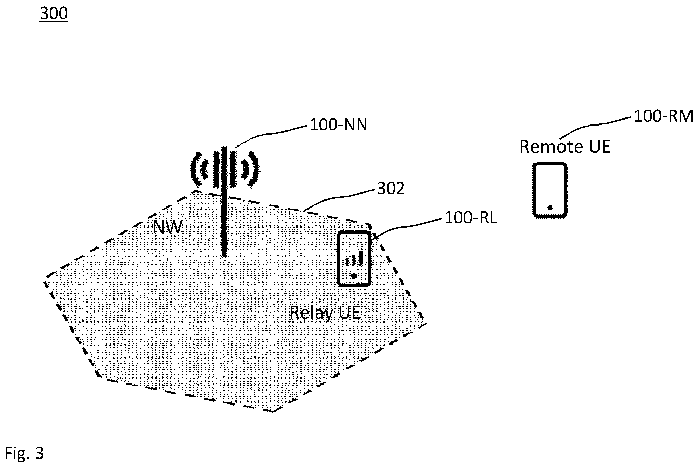

Fig. 3 shows an example deployment scenario for a relayed radio communication 300. The deployment scenario comprises a network node 100-NN of a RAN with coverage area 302. A RL radio device 100-RL is in the coverage area 302 of the network node 100-NN. A RM radio device 100-RM is outside of the coverage area 302 of the network node 100-NN, but in proximity to the RL radio deice 100-RL. By being in the proximity, the RM radio device 100-RM and the RL radio device 100-RL may be in a D2D communication.

Any embodiment may be implemented using a frame structure for the relayed radio communication and/or the D2D communication, e.g., according to 3GPP NR.

Similar to LTE, NR uses OFDM (Orthogonal Frequency Division Multiplexing) in the DL (e.g., from a network node, gNB, eNB, or base station, to a user equipment or UE).

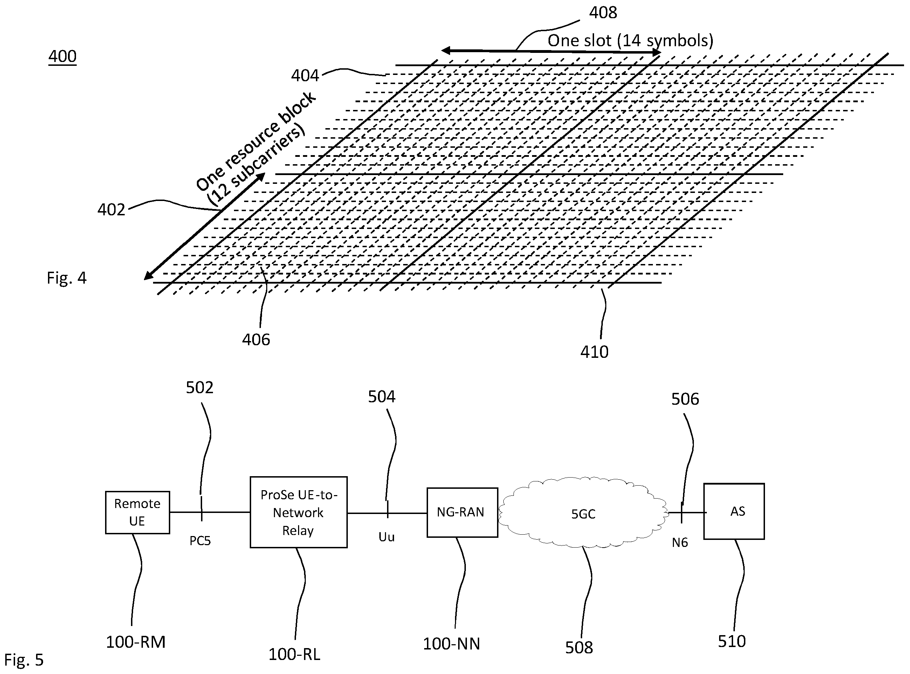

Fig. 4 schematically illustrates a physical resource grid 400 for a 3GPP NR implementation of the technique.

The basic NR physical resource over an antenna port can be seen as a time-frequency grid as illustrated in Fig. 4, where a resource block (RB) 402 in a 14-symbol slot 408 is shown. A RB 402 corresponds to 12 contiguous subcarriers 404 in the frequency domain. RBs 402 are numbered in the frequency domain, starting with 0 from one end of the system bandwidth. Each resource element (RE) 406 corresponds to one OFDM subcarrier during one OFDM symbol 410 interval. A slot 408 comprises 14 OFDM symbols 410.

Different subcarrier spacing values are supported in NR. The supported subcarrier spacing values (also referred to as different numerologies) are given by Δf=(15×2^µ) kHz where µ ∈ (0,1,2,3,4). Δf=15 kHz is the basic (or reference) subcarrier spacing that is also used in LTE.

In the time domain, DL and UL transmissions in NR are organized into equally-sized subframes of 1ms each similar to LTE. A subframe is further divided into multiple slots 408 of equal duration. The slot length for subcarrier spacing Δf=(15×2^µ) kHz is (1/2)^µ ms. There is only one slot 408 per subframe for Δf=15kHz, and a slot 408 consists of 14 OFDM symbols 410.

DL transmissions are dynamically scheduled, e.g., in each slot the gNB transmits DL control information (DCI) about which radio device (e.g., UE) data is to be transmitted to and which RBs in the current DL slot the data is transmitted on. This control information is conventionally transmitted in the first one or two OFDM symbols in each slot in NR. The control information is carried on the Physical Control Channel (PDCCH), and data is carried on the Physical Downlink Shared Channel (PDSCH). A radio device (e.g., a UE) first detects and decodes PDCCH and, if a PDCCH is decoded successfully, it (e.g., the UE) then decodes the corresponding PDSCH based on the DL assignment provided by decoded control information in the PDCCH.

In addition to PDCCH and PDSCH, there are also other channels and reference signals transmitted in the downlink, including synchronization signal blocks (SSBs), channel state information reference signals (CSI-RS), etc.

UL data transmissions, carried on Physical Uplink Shared Channel (PUSCH), can also be dynamically scheduled by the gNB by transmitting a DCI. The DCI (which is transmitted in the DL region) indicates a scheduling time offset so that the PUSCH is transmitted in a slot in the UL region.

Any embodiment may be implemented using a sidelink (SL) in NR for the D2D communication.

SL transmissions over NR are specified for Rel. 16. These are enhancements of the ProSe (PROximity-based SErvices) specified for LTE. Four new enhancements are particularly introduced to NR sidelink transmissions as follows:
- Support for unicast and groupcast transmissions are added in NR SL. For unicast and groupcast, the physical sidelink feedback channel (PSFCH) is introduced for a receiver radio device (e.g., a receiver UE) to reply the decoding status to a transmitter radio device (e.g., a transmitter UE).
- Grant-free transmissions, which are adopted in NR UL transmissions, are also provided in NR SL transmissions, to improve the latency performance.
- To alleviate resource collisions among different SL transmissions launched by different radio devices (e.g., different UEs), it enhances channel sensing and resource selection procedures, which also lead to a new design of PSCCH.
- To achieve a high connection density, congestion control and thus the quality of service (QoS) management is supported in NR SL transmissions.

To enable the above enhancements, new physical channels and reference signals (RSs) are introduced in NR (available in LTE before.):
- PSSCH (Physical Sidelink Shared Channel, SL version of PDSCH): The PSSCH is transmitted by a SL transmitter radio device (e.g., SL transmitter UE), which conveys SL transmission data, system information blocks (SIBs) for radio resource control (RRC) configuration, and a part of the sidelink control information (SCI).
- PSFCH (Physical Sidelink, SL version of PUCCH): The PSFCH is transmitted by a SL receiver radio device (e.g., a SL receiver UE) for unicast and groupcast, which conveys 1 bit information over 1 RB for the HARQ acknowledgement (ACK) and the negative ACK (NACK). In addition, channel state information (CSI) is carried in the medium access control (MAC) control element (CE) over the PSSCH instead of the PSFCH.
- PSCCH (Physical Sidelink Common Control Channel, SL version of PDCCH): When the traffic to be sent to a receiver radio device (e.g., a receiver UE) arrives at a transmitter radio device (e.g., a transmitter UE), a transmitter radio device (e.g., transmitter UE) should first send the PSCCH, which conveys a part of SCI (Sidelink Control information, SL version of DCI) to be decoded by any radio device (e.g., UE) for the channel sensing purpose, including the reserved time-frequency resources for transmissions, demodulation reference signal (DMRS) pattern and antenna port, etc.
- Sidelink Primary/Secondary Synchronization Signal (S-PSS/S-SSS): Similar DL transmissions in NR, in SL transmissions, primary and secondary synchronization signals (called S-PSS and S-SSS, respectively) are supported. Through detecting the S-PSS and S-SSS, a radio device (e.g., a UE) is able to identify the SL synchronization identity (SSID) from the radio device (e.g., UE) sending the S-PSS/S-SSS. Through detecting the S-PSS/S-SSS, a radio device (e.g., UE) is therefore able to know the characteristics of the radio device (e.g., UE) transmitting the S-PSS/S-SSS. A series of processes of acquiring timing and frequency synchronization together with SSIDs of radio devices (e.g., UEs) is called initial cell search. Note that the radio device (e.g., UE) sending the S-PSS/S-SSS may not be necessarily involved in SL transmissions, and a node (e.g., a UE and/or eNB and/or gNB) sending the S-PSS/S-SSS is called a synchronization source. There are 2 S-PSS sequences and 336 S-SSS sequences forming a total of 672 SSIDs in a cell.
- Physical Sidelink Broadcast Channel (PSBCH): The PSBCH is transmitted along with the S-PSS/S-SSS as a synchronization signal/PSBCH block (SSB). The SSB has the same numerology as PSCCH/PSSCH on that carrier, and an SSB should be transmitted within the bandwidth of the configured BWP. The PSBCH conveys information related to synchronization, such as the direct frame number (DFN), indication of the slot and symbol level time resources for sidelink transmissions, in-coverage indicator, etc. The SSB is transmitted periodically at every 160 ms.
- DMRS, phase tracking reference signal (PT-RS), channel state information reference signal (CSI-RS): These physical reference signals supported by NR DL/UL transmissions are also adopted by SL transmissions. Similarly, the PT-RS is only applicable for FR2 transmission.

Another new feature is the two-stage SL control information (SCI). This a version of the DCI for SL. Unlike the DCI, only part (first stage) of the SCI is sent on the PSCCH. This part is used for channel sensing purposes (including the reserved time-frequency resources for transmissions, demodulation reference signal (DMRS) pattern and antenna port, etc.) and can be read by all radio devices (e.g., UEs) while the remaining (second stage) scheduling and control information such as a 8-bits source identity (ID) and a 16-bits destination ID, NDI, RV and HARQ process ID is sent on the PSSCH to be decoded by the receiver radio device (e.g., UE).

Similar as for PRoSE in LTE, NR SL transmissions have the following two modes of resource allocations:
- Mode 1: SL resources are scheduled by a network node (e.g., gNB).
- Mode 2: The radio device (e.g., UE) autonomously selects SL resources from a configured or preconfigured SL resource pool(s) based on the channel sensing mechanism.

For the in-coverage radio device (e.g., UE), a network node (e.g., gNB) can be configured to adopt Mode 1 or Mode 2. For the out-of-coverage radio device (e.g., UE), only Mode 2 can be adopted.

As in LTE, scheduling over the SL in NR is done in different ways for Mode 1 and Mode 2.

Mode 1 supports the following two kinds of grants, namely dynamic grants and configured grants.

Dynamic grant: When the traffic to be sent over SL arrives at a transmitter radio device (e.g., UE), this radio device (e.g., UE) should launch the four-message exchange procedure to request SL resources from a network node, e.g. gNB (SR on UL, grant, BSR on UL, grant for data on SL sent to the radio device, e.g., UE). During the resource request procedure, a network node (e.g., gNB) may allocate a SL radio network temporary identifier (SL-RNTI) to the transmitter radio device (e.g., UE). If this SL resource request is granted by a network node (e.g., gNB), then a network node (e.g., gNB) indicates the resource allocation for the PSCCH and the PSSCH in the downlink control information (DCI) conveyed by PDCCH with cyclic redundancy check (CRC) scrambled with the SL-RNTI. When a transmitter radio device (e.g., UE) receives such a DCI, a transmitter radio device (e.g., UE) can obtain the grant only if the scrambled CRC of DCI can be successfully solved by the assigned SL-RNTI. A transmitter radio device (e.g., UE) then indicates the time-frequency resources and the transmission scheme of the allocated PSSCH in the PSCCH, and launches the PSCCH and the PSSCH on the allocated resources for SL transmissions. When a grant is obtained from a network node (e.g., gNB), a transmitter radio device (e.g., UE) can only transmit a single transport block (TB). As a result, this kind of grant is suitable for traffic with a loose latency requirement.

Configured grant: For the traffic with a strict latency requirement, performing the four-message exchange procedure to request SL resources may induce unacceptable latency. In this case, prior to the traffic arrival, a transmitter radio device (e.g., UE) may perform the four-message exchange procedure and request a set of resources. If a grant can be obtained from a network node (e.g., gNB), then the requested resources are reserved in a periodic manner. Upon traffic arriving at a transmitter radio device (e.g., UE), this radio device (e.g., UE) can launch the PSCCH and the PSSCH on the upcoming resource occasion. This kind of grant is also known as grant-free transmissions.

In both dynamic grant and configured grant, a SL receiver radio device (e.g., UE) cannot receive the DCI since it is addressed to the transmitter radio device (e.g., UE), and therefore a receiver radio device (e.g., UE) should perform blind decoding to identify the presence of PSCCH and find the resources for the PSSCH through the SCI.

When a transmitter radio device (e.g., UE) launches the PSCCH, CRC is also inserted in the SCI without any scrambling.

In the Mode 2 resource allocation, when traffic arrives at a transmitter radio device (e.g., UE), this transmitter radio device (e.g., UE) should autonomously select resources for the PSCCH and the PSSCH. To further minimize the latency of the feedback HARQ ACK/NACK transmissions and subsequently retransmissions, a transmitter radio device (e.g., UE) may also reserve resources for PSCCH/PSSCH for retransmissions. To further enhance the probability of successful TB decoding at one shot and thus suppress the probability to perform retransmissions, a transmitter radio device (e.g., UE) may repeat the TB transmission along with the initial TB transmission. This mechanism is also known as blind retransmission. As a result, when traffic arrives at a transmitter radio device (e.g., UE), then this transmitter radio device (e.g., UE) should select resources for the following transmissions:
1) The PSSCH associated with the PSCCH for initial transmission and blind retransmissions.
2) The PSSCH associated with the PSCCH for retransmissions.

Since each transmitter radio device (e.g., UE) in SL transmissions should autonomously select resources for above transmissions, how to prevent different transmitter radio devices (e.g., UEs) from selecting the same resources turns out to be a critical issue in Mode 2. A particular resource selection procedure is therefore imposed to Mode 2 based on channel sensing. The channel sensing algorithm involves measuring reference signal received power (RSRP) on different subchannels and requires knowledge of the different radio devices (e.g., UEs) power levels of DMRS on the PSSCH or the DMRS on the PSCCH depending on the configuration. This information is known only after receiver SCI launched by (all) other radio devices (e.g., UEs). The sensing and selection algorithm is rather complex.

The D2D communication may be based on or initiated by a discovery procedure.

There are D2D discovery procedures for detection of services and applications offered by other radio devices (e.g., UEs) in close proximity. This is part of LTE Rel 12 and Rel 13. The discovery procedure has two modes, mode A based on open announcements (broadcasts) and mode B, which is request/response. The discovery mechanism is controlled by the application layer (ProSe). The discovery message is sent on the Physical Sidelink Discovery Channel (PSDCH) which is not available in NR. Also, there is a specific resource pool for announcement and monitoring of discovery messages. The discovery procedure can be used to detect radio devices (e.g., UEs) supporting certain services or applications before initiating direct communication.

The relayed radio communication through the relay radio device, e.g. device 100-RL, may be implemented as a Layer 3 (L3) UE-to-Network relay.

In the 3GPP document TR 23.752, version 0.3.0, clause 6.6, the layer-3 based UE-to-Network relay is described as further discussed in connection to Fig. 5.

As shown in Fig. 5, the ProSe 5G UE-to-Network Relay entity 100-RL provides the functionality to support connectivity to the network 100-NN, 508 for Remote UEs 100-RM. It can be used for both public safety services and commercial services (e.g. interactive service).

A UE is considered to be a Remote UE 100-RM for a certain ProSe UE-to-Network relay 100-RL if it has successfully established a PC5 link 502 to this ProSe 5G UE-to-Network Relay 100-RL. A Remote UE 100-RM can be located within NG-RAN 100-NN coverage or outside of NG-RAN c100-NN overage.

The ProSe 5G UE-to-Network Relay 100-RL shall relay unicast traffic (UL and DL) between the Remote UE 100-RM and the network 100-NN, 508, e.g. using the Uu interface 504. The ProSe UE-to-Network Relay 100-RL shall provide generic function that can relay any IP traffic.

The network may comprise an NG-RAN 100-NN, a 5G Core Network (5GC) 508 and an N6 link 506 to Access Stratum (AS) 510.

One-to-one Direct Communication is used between Remote UEs 100-RM and ProSe 5G UE-to-Network Relays 100-RL for unicast traffic as specified in solutions for Key Issue #2 in the 3GPP document TR 23.752, version 0.3.0.

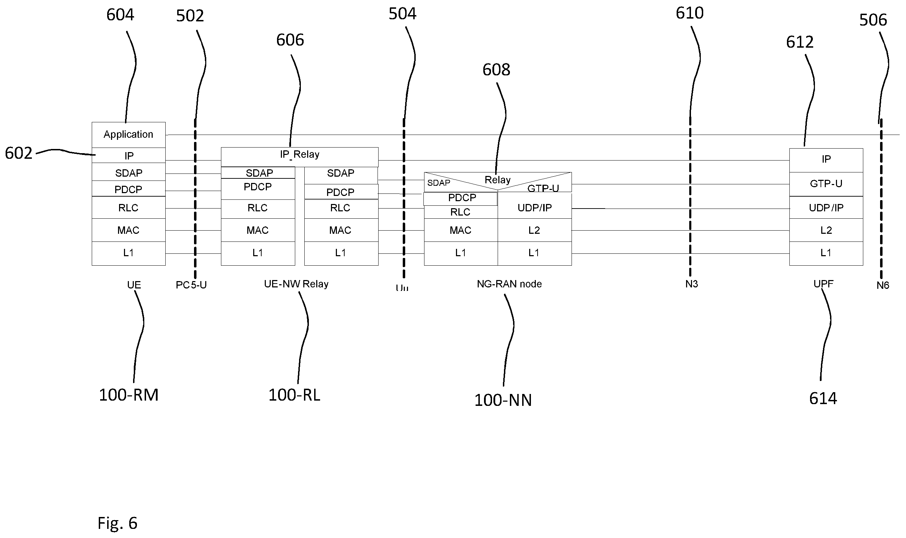

Fig. 6 schematically illustrates examples of protocol stacks for a L3 UE-to-Network Relay, e.g., according to ProSe 5G UE-to-Network Relay specified in the 3GPP document TR 23.752 version 0.3.0.

Hop-by-hop security is supported in the PC5 link 502 and Uu link 504. If there are requirements beyond hop-by-hop security for protection of RM radio device traffic, security over IP layer 602, 606, 612 needs to be applied.

Further security details (integrity and privacy protection for RM radio device to network communication) will be specified in SA WG3.

A ProSe 5G UE-to-Network Relay capable radio device (e.g., UE) 100- RL may register to the network (if not already registered) and establish a PDU session enabling the necessary relay traffic, or it may need to connect to additional PDU session(s) or modify the existing PDU session in order to provide relay traffic towards RM radio device(s) 100-RM (e.g., UE(s)). At least in some embodiments, PDU session(s) supporting UE-to-Network Relay shall only be used for Remote ProSe UE(s) relay traffic.

In Fig. 6, the network comprises a user plane function (UPF) at reference sign 614 with N3 link 610 to the network node 100-NN. The application layer 604 is an example of a transparent layer. Layers 606, 608 comprise an adaptation layer for the relayed radio communication.

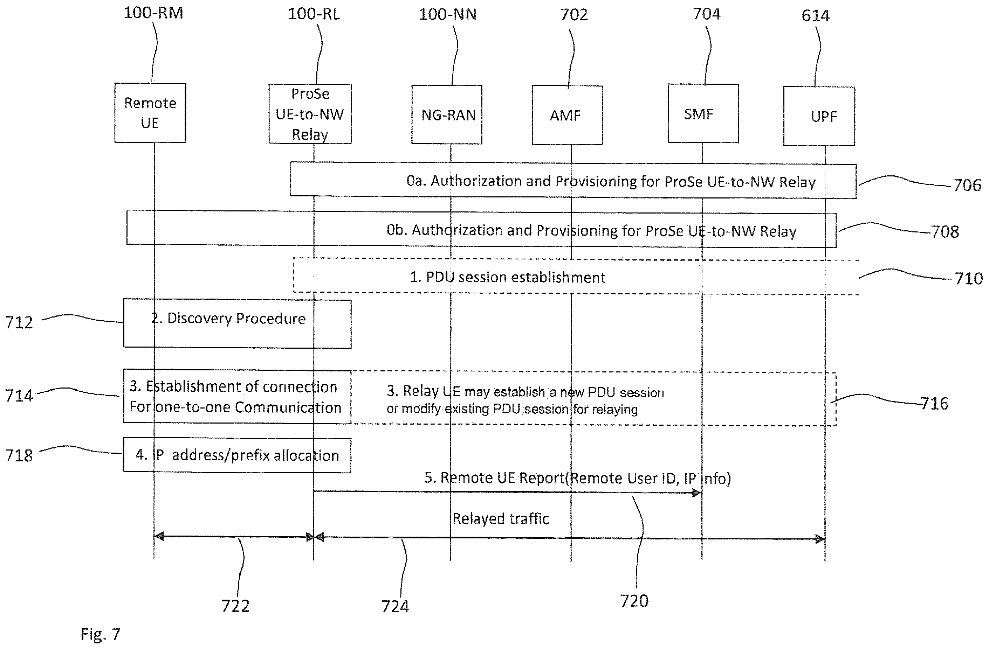

Fig. 7 schematically illustrates an example of a ProSe 5G UE-to-Network Relay according to the 3GGP document TR 23.752, version 0.3.0.

The RM radio device (e.g., UE) to network relayed radio communication in Fig. 7 comprises the following steps:
Step 0. During the Registration procedure, Authorization and provisioning is performed at reference signs 706 and 708 for the RL radio device (e.g., ProSe UE-to-NW relay) 100-RL and the RM radio device (e.g., remote UE) 100-RM, respectively. Authorization and provisioning procedure may be any solution for key issue #1 and #3 in the 3GPP document TR 23.752, version 0.3.0.
Step 1. The ProSe 5G UE-to-Network Relay may, at reference sign 710, establish a PDU session for relaying with default PDU session parameters received in step 0 (at reference signs 706, 708) or pre-configured in the RL radio device (e.g., UE-to-NW relay) 100-RL, e.g. S-NSSAI, DNN, SSC mode. In case of IPv6, the RL radio device (e.g., ProSe UE-to-Network Relay) 100-RL obtains the IPv6 prefix via prefix delegation function from the network as defined in TS 23.501 v16.5.0.
Step 2. Based on the Authorization and provisioning in step 0 (at reference sign 706, 708), at reference sing 712 the RM radio device (e.g., Remote UE) 100-RM performs discovery of a RL radio device (e.g., ProSe 5G UE-to-Network Relay) 100-RL using any solution for key issue #1 and #3 in the 3GPP document TR 23.752, version 0.3.0. As part of the discovery procedure the RM radio device (e.g., Remote UE) 100-RM learns about the connectivity service the RL radio device (e.g., ProSe UE-to-Network Relay) 100-RL provides.
Step 3. The RM radio device (e.g., Remote UE) 100-RM selects at reference sign 714 a RL radio device (e.g., ProSe 5G UE-to-Network Relay) 100-RL and establishes a connection for One-to-one ProSe Direct Communication as described in TS 23.287 v16.3.0 and/or modifies an existing communication as shown at reference sing 716.

If there is no PDU session satisfying the requirements of the PC5 connection with the RM radio device (e.g., remote UE) 100-RM, e.g. S-NSSAI, DNN, QoS, the RL radio device (e.g., ProSe 5G UE-to-Network Relay) 100-RL initiates a new PDU session establishment or modification procedure for relaying.

Step 4. At reference sing 718, IPv6 prefix or IPv4 address is allocated for the RM radio device (e.g., remote UE) 100-RM as it is defined in TS 23.303 v16.0.0 clauses 5.4.4.2 and 5.4.4.3. From this point the uplink and downlink relaying can start.

Step 5. The RL radio device (e.g., ProSe 5G UE-to-Network Relay) 100-RL sends a RM radio device (e.g., Remote UE) Report (e.g., comprising Remote User ID and/or IP info) message (e.g., through the access and mobility management function, AMF, 702) to the session management function (SMF) 704 for the PDU session associated with the relay. The Remote User ID is an identity of the RM radio device (e.g., Remote UE) user (provided via User Info) that was successfully connected in step 3 at reference signs 714, 716. The SMF 704 stores the Remote User IDs and the related IP info in the RL radio device (e.g., ProSe 5G UE-to-Network Relay) for the PDU connection associated with the relay.

For IP info the following principles apply:
- for IPv4, the UE-to-network Relay (e.g., comprising legs 722, 724) shall report TCP/UDP port ranges assigned to individual RM radio devices (e.g., Remote UE(s)) 100-RM (along with the Remote User ID);
- for IPv6, the UE-to-network Relay(e.g., comprising legs 722, 724) shall report IPv6 prefix(es) assigned to individual RM radio devices (e.g., Remote UE(s)) 100-RM (along with the Remote User ID).

The RM radio device (e.g., Remote UE) Report message at reference sign 720 shall be sent when the RM radio device (e.g., Remote UE) disconnects from the ProSe 5G UE-to-Network Relay (e.g. upon explicit layer-2 link release and/or based on the absence of keep alive messages over PC5) to inform the SMF 704 that the RM radio device(s) (e.g., Remote UE(s)) 100-RM has/have left.

In the case of Registration Update procedure involving SMF 704 change the Remote User ID(s) and/or related IP info corresponding to the connected RM radio device(s) (e.g., Remote UE(s)) are transferred to the new SMF 704 as part of SM context transfer for the relayed radio communication (e.g., ProSe 5G UE-to-Network Relay 100-RL).

It is noted that in order for the SMF 704 to have the RM radio device(s) (e.g., Remote UE(s)) 100-RM information, the Home Public Land Mobile Network (HPLMN) and the Visited PLMN (VPLMN), in which the RL radio device (e.g., ProSe 5G UE-to-Network Relay) 100-RL is authorised to operate, needs to support the transfer of parameters related to the RM radio device(s) (e.g., Remote UE(s)) 100-RM in case the SMF 704 is in the HPLMN.

It is further noted that when RM radio device(s) (e.g., Remote UE(s)) 100-RM disconnect from the RL radio device (e.g., ProSe UE-to-Network Relay) 100-RL, it is up to implementation how relaying PDU sessions are cleared and/or disconnected by the RL radio device (e.g., ProSe 5G UE-to-Network Relay) 100-RL.

After being connected to the RL radio device (e.g., ProSe 5G UE-to-Network Relay) 100-RL, the RM radio device (e.g., Remote UE) 100-RL keeps performing the measurement of the signal strength of the discovery message sent by the RL radio device (e.g., ProSe 5G UE-to-Network Relay 100-RLfor relay reselection.

The technique may also work when the RM and/or RL radio device (e.g., ProSe 5G UE-to-Network Relay UE) 100-RM and/or 100-RL connects in EPS using LTE. In this case for the RM radio device (e.g., Remote UE) report the procedures defined in TS 23.303 v16.0.0 can be used.

The relayed radio communication through the RL radio device 100-RL may be implemented as a Layer 2 (L2) UE-to-Network relay.

In the 3GPP document TR 23.752, version 0.3.0, clause 6.7, the layer-2 based RL radio device (e.g., UE-to-Network relay 100-RL) is described.

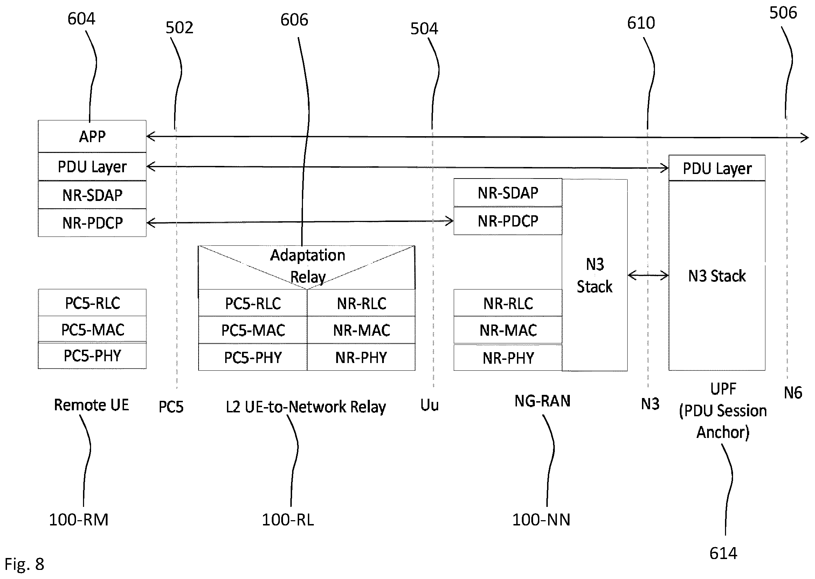

Herein below, an example of the protocol architecture supporting a L2 RL radio device (e.g., UE-to-Network Relay UE) 100-RL is provided in connection with Fig. 8.

The L2 RL radio device (e.g., UE-to-Network Relay UE) 100-RL provides forwarding functionality that can relay any type of traffic over the PC5 link 502.

The L2 RL radio device (e.g., UE-to-Network Relay UE) 100-RL provides the functionality to support connectivity to the 5GS (e.g., NG-RAN 100-NN) for RM radio devices (e.g., Remote UEs) 100-RM. A radio device (e.g., UE) is considered to be a RM radio device (e.g., Remote UE) 100-RM if it has successfully established a PC5 link 502 to the L2 RL radio device (e.g., UE-to-Network Relay UE) 100-RL. A RM radio device (e.g., Remote UE) 100-RM can be located within NG-RAN 100-NN coverage or outside of NG-RAN 100-NN coverage.

Fig. 8 illustrates the protocol stack for the user plane transport according to the 3GPP document TR 23.752, version 0.3.0, related to a PDU session, including a Layer 2 RL radio device (e.g., UE-to-Network Relay UE) 100-RL. The PDU layer 802 corresponds to the PDU carried between the RM radio device (e.g., Remote UE) 100-RM and the Data Network (DN), e.g. represented by the UPF 614 in Fig. 8, over the PDU session. It is important to note that the two endpoints of the PDCP link are the RM radio device (e.g., Remote UE) and the network node (e.g., gNB) 100-NN. The relay function is performed below PDCP, e.g., a schematically depicted at reference sign 606. This means that data security is ensured between the RM radio device (e.g., Remote UE) 100-RM and the RAN and/or network node (e.g., gNB) 100-NN without exposing raw data at the RL radio device (e.g., UE-to-Network Relay UE) 100-RL.

The adaptation relay layer 606 within the RL radio device (e.g., UE-to-Network Relay UE) 100-RL can differentiate between signaling radio bearers (SRBs) and data radio bearers (DRBs) for a particular RM radio device (e.g., Remote UE) 100-RM. The adaption relay layer 606 is also responsible for mapping PC5 traffic (at reference sing 502) to one or more DRBs of the Uu interface at reference sing 504. The definition of the adaptation relay layer 606 is under the responsibility of RAN WG2.

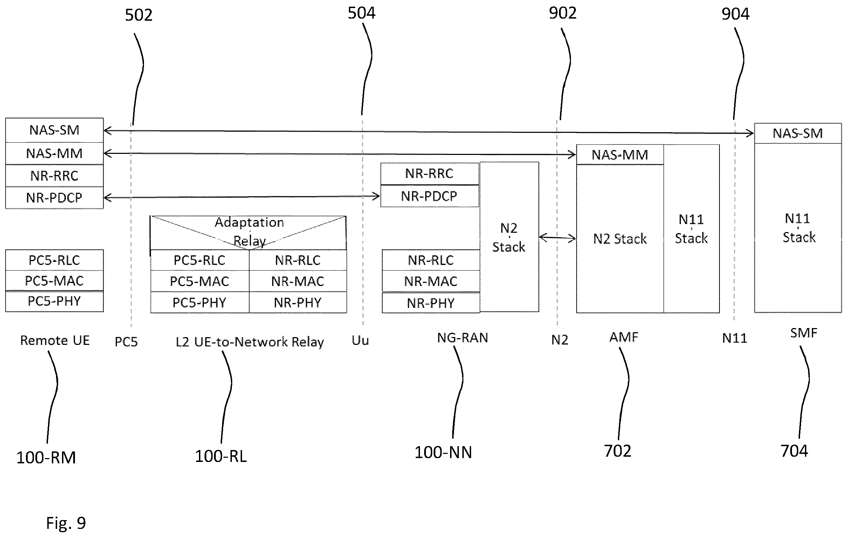

Fig. 9 illustrates the protocol stack of the non-access stratum (NAS) connection according to the 3GPP document TR 23.752, version 0.3.0 for the RM radio device (e.g., Remote UE) 100-RM to the NAS-MM and NAS-SM components at reference sings 702 and 704, respectively. The NAS messages are transparently transferred between the RM radio device (e.g., Remote UE) 100-RM and 5G-RAN 100-NN over the Layer 2 RL radio device (e.g., UE-to-Network Relay UE) 100-RL using the following:
- PDCP end-to-end connection where the role of the RL radio device (e.g., UE-to-Network Relay UE) 100-RL is to relay the PDUs over the signaling radio bear without any modifications.
- N2 connection between the 5G-RAN 100-NN and AMF 702 over N2 at reference sign 902.
- N3 connection between AMF 702 and SMF 704 over N11 at reference sign 904.

The role of the RL radio device (e.g., UE-to-Network Relay UE) 100-RL is to relay the PDUs from the signaling radio bearer without any modifications.

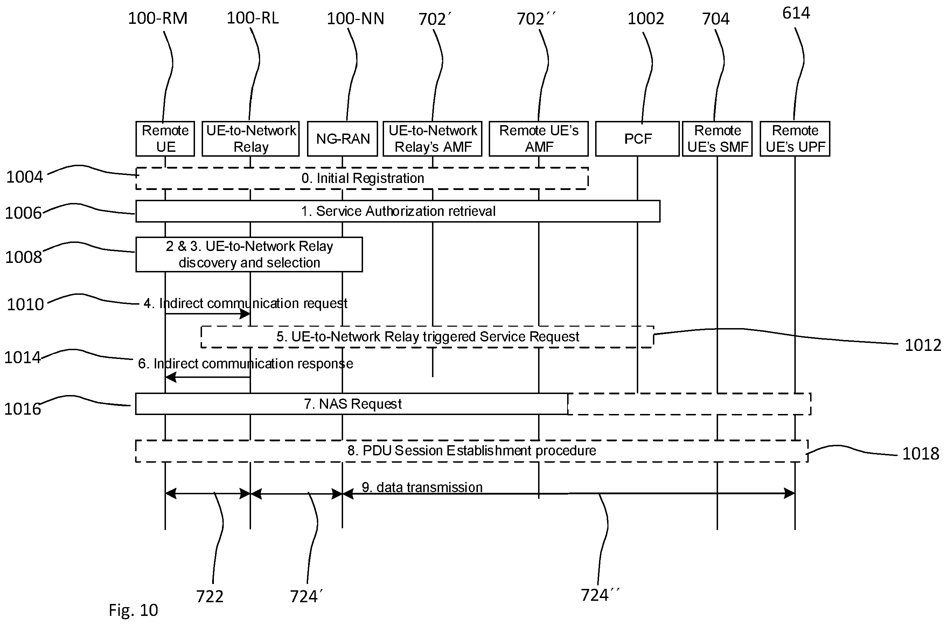

A connection establishment for the RM radio device 100-RM may comprise at least one of the steps in below described procedures in connection with Fig. 10, which schematically illustrates a connection establishment for a relayed (e.g., indirect) radio communication via a RL radio device (e.g., UE-to-Network Relay UE) 100-RL as described in the 3GPP document TR 23.752, version 0.3.0.

Step 0. If in coverage, the RM radio device (e.g., Remote UE) 100-RM and RL radio device (e.g., UE-to-Network Relay UE) 100-RL may independently perform the initial registration to the network according to registration procedures in TS 23.502 v16.5.0 at reference sign 1004. The allocated 5G global unique temporary identifier (GUTI) of the RM radio device (e.g., Remote UE) 100-RM is maintained when later NAS signaling between RM radio device (e.g., Remote UE) 100-RM and Network 100-NN is exchanged via the RL radio device (e.g., UE-to-Network Relay UE) 100-RL.

It is noted that the current procedures shown here assume a single hop relay. The technique disclosed herewith may be extended to multi-hop relay.

In a step 1 of the procedure at reference sign 1006, if in coverage, the RM radio device (e.g., Remote UE) 100-RM and RL radio device (e.g., UE-to-Network Relay UE) 100-RL independently get the service authorization for indirect communication from the network.

Steps 2-3. The RM radio device (e.g., Remote UE) 100-RM and RL radio device (e.g., UE-to-Network Relay UE) 100-RL perform RL radio device (e.g., UE-to-Network Relay UE) discovery and selection at reference sign 1008.

Step 4. The RM radio device (e.g., Remote UE) 100-RM initiates a one-to-one communication connection with the selected RL radio device (e.g., UE-to-Network Relay UE) 100-RL over PC5, by sending an indirect communication request message to the RL radio device (e.g., UE-to-Network Relay) 100-RL at reference sing 1010.

Step 5. If the RL radio device (e.g., UE-to-Network Relay UE) 100-RL is in CM_IDLE state, triggered by the communication request received from the RM radio device (e.g., Remote UE) 100-RM, the RL radio device (e.g., UE-to-Network Relay UE) 100-RL sends a Service Request message over PC5 to its serving AMF 702' at reference sign 1012.

The Relay's AMF 702' may perform authentication of the RL radio device (e.g., UE-to-Network Relay UE) 100-RL based on NAS message validation and, if needed, the AMF 702' will check the subscription data.

If the RL radio device (e.g., UE-to-Network Relay UE) 100-RL is already in CM_CONNECTED state and is authorised to perform Relay service, the step 5 at reference sign 1012 is omitted.

Step 6. The RL radio device (e.g., UE-to-Network Relay UE) 100-RL sends the indirect communication response message to the RM radio device (e.g., Remote UE) 100-RM at reference sign 1014.

Step 7. The RM radio device (e.g., Remote UE) 100-RM sends a NAS message to the serving AMF 702" at reference sign 1016. The NAS message is encapsulated in an RRC message that is sent over PC5 to the RL radio device (e.g., UE-to-Network Relay UE) 100-RL, and the RL radio device (e.g., UE-to-Network Relay UE) 100-RL forwards the message to the NG-RAN 100-NN. The NG-RAN 100-NN derives the RM radio device's (e.g., Remote UE's) serving AMF 702" and forwards the NAS message to this AMF 702''.

It is noted that here it is assumed that the RM radio device's (e.g., Remote UE's) PLMN is accessible by the RL radio device (e.g., UE-to-Network Relay's) PLMN and that the RL radio device (e.g., UE-to-Network Relay UE) AMF 702' supports all S-NSSAls (e.g., network slice selection assistance information) the RM radio device (e.g., Remote UE) 100-RM may want to connect to.

If the RM radio device (e.g., Remote UE) 100-RM has not performed the initial registration to the network in step 0 at reference sign 1004, the NAS message is the initial registration message. Otherwise, the NAS message is a service request message.

If the RM radio device (e.g., Remote UE) 100-RM performs initial registration via the RL radio device (e.g., UE-to-Network relay) 100-RL, the RM radio device's (e.g., Remote UE's) 100-RM serving AMF 702" may perform authentication of the RM radio device (e.g., Remote UE) 100-RM based on NAS message validation and, if needed, the RM radio device's (e.g., Remote UE's) AMF 702" checks the subscription data.

For service request case, User Plane connection for PDU Sessions can also be activated. The other steps follow the clause 4.2.3.2 in TS 23.502 v16.5.0.

Step 8. The RM radio device (e.g., Remote UE) 100-RM may trigger the PDU Session Establishment procedure as defined in clause 4.3.2.2 of TS 23.502 v16.5.0 at reference sign 1018.

Step 9. The data is transmitted between RM radio device (e.g., Remote UE) 100-RM and UPF 614 via RL radio device (e.g., UE-to-Network Relay UE) 100-RL and NG-RAN 100-NN on the legs 722, 724' and 724". The RL radio device (e.g., UE-to-Network Relay UE) 100-RL forwards all the data messages between the RM radio device (e.g., Remote UE) 100-RM and NG-RAN 100-NN using the RAN specified L2 relay method.

Any embodiment disclosed herewith may meet one or more objective defined for 3GPP Rel-17 SI on NR sidelink relay in the 3GPP contribution RP-193253 and/or the below objectives and/or objective studied during 3GPP Rel-17 time frame.

Embodiments of the technique may fulfil at least one of the following items, e.g., in a single-hop NR sidelink-based relay.
1. A mechanism with minimum specification impact to support the System Architecture requirements for sidelink-based UE-to-network and UE-to-UE relay, focusing on the following aspects (if applicable) for layer-3 relay and layer-2 relay;
   A. Relay (re-)selection criterion and procedure;
   B. Relay/Remote UE authorization;
   C. QoS for relaying functionality;
   D. Service continuity;
   E. Security of relayed connection after SA3 has provided its conclusions;
   F. Impact on user plane protocol stack and control plane procedure, e.g., connection management of relayed connection;
2. A mechanism to support upper layer operations of discovery model/procedure for sidelink relaying, assuming no new physical layer channel / signal;

Embodiments of the technique may take into account further input from 3GPP SA WGs, e.g., SA2 and SA3, for the bullets above (if applicable).

Embodiments may assume that UE-to-network relay and UE-to-UE relay use the same relaying solution.

Embodiments may be forward compatibility for multi-hop relay support in a future release needs to be taken into account.

According to the above study objectives, SL based radio device-to-network and/or UE-to-network (U2N) relay and radio device-to- radio device and/or UE to UE (U2U) relay is envisaged to be studied. The study will also consider forward compatibility, e.g., the solution may be easily extended to be applicable for multi-hop relay.

Any one of the TX 100-TX and RX 100-RX may be implemented by a network node (e.g., a base station) 100-NN of the RAN or by the relay radio device (e.g., RL-UE) 100-RL or by the remote radio device (e.g., RM-UE) 100-RM.

Embodiments are described in the context of NR, e.g., the RM radio device (e.g., Remote UE) 100-RM and the RL radio device (e.g., relay UE) 100-RL are deployed in a same or different NR cell, e.g. cell 302 in Fig. 3. The embodiments are also applicable to other relay scenarios including radio device (e.g., UE) to network relay or radio device (e.g., UE) to radio device (e.g., UE) relay where the RM radio device (e.g., Remote UE) 100-RM and the RL radio device (e.g., relay UE) 100-RL may be based on LTE SL and/or NR SL, the Uu connection between the RL radio device (e.g. relay UE) and the RAN (e.g., base station) 100-NN may be LTE Uu or NR Uu. A relay scenario containing multiple relay hops is also covered. The connection between a RM radio device (e.g. Remote UE) 100-RM and a RL radio device (e.g. relay UE) 100-RL is also not limited to a SL. Any short range communication technology, such as Wi-Fi, is equally applicable.

In the below embodiments, for illustrative purposes any D2D communication may be (as an example without limitation) a SL between two radio devices (e.g. UEs).

The embodiments are also applicable to a relay scenario where the RL radio device (e.g., relay UE) 100-RL is configured with multiple connections (e.g., the number of connections is equal to or larger than two) to the RAN 100-NN (e.g., dual connectivity and/or carrier aggregation, etc.).

The embodiments are described in the context of NR, i.e., remote UE and relay UE are deployed in a same or different NR cell. The embodiments are also applicable to other relay scenarios including UE to network relay or UE to UE relay where the link between remote UE and relay UE may be based on LTE sidelink or NR sidelink, the Uu connection between relay UE and base station may be LTE Uu or NR Uu. A relay scenario containing multiple relay hops is also covered. The connection between remote UE and relay UE is also not limited to sidelink. Any short range communication technology such as Wi-Fi is equally applicable. In the below embodiments, any grant issued by the gNB is for a sidelink transmission between two UEs.

The embodiments are also applicable to a relay scenario where the relay UE is configured with multiple connections (i.e., the number of connections is equal or larger than two) to the RAN (e.g., dual connectivity, carrier aggregation etc).

The embodiments are applicable to both L2 relay and L3 relay based relay scenarios. In the below embodiments, the term "token" or "authentication code" are used to stand for a value which is computed by an integrity protection algorithm which is configured for adaptation layer security. The below embodiments are not limited by the terms. The other similar terms are also interchangeably applicable,

In the first embodiment, a security mechanism is introduced to provide integrity protection of the header of adaptation layer. As a correspondence, a field to carry the token/authentication code needs to be included in the PDU which is integrity protected. The token may be represented by an integer value, an enumerated value or a sequence including different fields (where the "type" of these fields can be integer, enumerated, or others).

For a hop which is being integrity protected, the hop includes at least one transmitter node and one receiver node, each node could be e.g., a gNB or a UE.

At least one of the following features may be implemented at the RX or TX.

As a first feature, a security token is provided to the receiving node in an encrypted message (e.g., dedicated RRC or PC5-S, or broadcast). The node stores this security token. This token may be configured by the gNB. Alternatively, the token is configured by a coordinator UE node which is a UE node operating as coordinator in a certain proximity distance. Alternatively, the token is configured by an application server. The token is configured to nodes in a secured way (e.g., in encrypted RRC messages or PC5-S). For a hop out of network coverage, the token can be preconfigured or, eventually, the node can continue to use the token that was previously configured when this was in coverage of a gNB.

As a second feature, in every adaptation layer PDU transmitted from a transmitter node to a receiver node, a security token is included to integrity protect the adaptation layer header.

As a third feature, the receiver node validates a received security token in an authorization check. As part of the authorization check, it compares the security token in the received adaptation header with the token stored in the receiver node memory.

As a fourth feature, the receiver node only process reception of a PDU of adaptation layer, if the adaption layer header of the PDU does contain same security token as stored in the receiver node memory.

The token is only applicable for a configured time period or a configured number of PDUs or a configured number of transmissions (may only count the initial transmissions). It means that the security configuration which is configured to the nodes may contain relevant counters or timers for the nodes to decide when the token should be cleared. A new token must be applied after the old token is cleared. Alternatively, the validity of a certain security configuration may be fixed in the specification. Yet, the validity of a certain security configuration may be linked to a particular QoS application or some other relevant criteria (this mean that there will be a mapping in the specification where for each QoS application or criteria, there will be a validity value to be applied by the receiver and transmitter UE).

For critical data or signaling message requiring strong security protection, the token may be only valid for one transmission. For next transmission, a new token must be applied after the old token is cleared. In this case, an indication is introduced in the security configuration to notify the receiver or transmitter UE that such configuration is a one-shot configuration. Alternatively, this indication can be also implicit in case no validity information regarding a certain security configuration are indicated to the receiver and transmitter UE.

Since configuration or reconfiguration of a token may introduce unnecessary latency to data transfer, as an alternative, a security configuration for adaptation layer of a relay hop can contain multiple tokens or a pool of tokens. In this case, the transmitter node can select any one of the tokens for each transmission, but, the selected token may be used for a limited number of transmissions or a limited time period, after that, that token need to be cleared. Upon reception of a transmission, the receiver node can check if the received token is valid by checking if the token has been included in the configuration, and the associated validation period or validation counter is not expired. Alternatively, in case the transmitter node uses all the available tokens configured (or part of the available pool), the transmitter node needs to ask for a reconfiguration of the security parameters. This means that a token can be used only once and cannot be reused.

In the second embodiment, the integrity protection function including both integrity protection and integrity verification is performed in adaptation layer, if configured. For a PDU of adaptation layer, it is the PDU header that is integrity protected. The data part of the PDU is not to be protected, since it is already protected at the upper layer (i.e., PDCP layer). As a correspondence, a field to carry the token/authentication code which is computed by the integrity protection algorithm needs to be included in the PDU which is integrity protected.

The integrity protection algorithm and keys to be used by adaptation layer entity are configured by the gNB. Alternatively, they are configured by a coordinator UE node which is a UE node operating as coordinator in a proximity distance. Alternatively, they are configured by an application server. The configurations are signaled to nodes in an encrypted message (e.g., via dedicated RRC, PC5-S, or broadcast). The integrity protection function is activated/suspended/resumed by upper layers (e.g., via dedicated RRC, PC5-RRC, PC5-S, or broadcast).

For integrity protection and verification, at least one of the below parameters is required by adaptation layer for header integrity protection:
1) a counter value indicating the sequence number of the PDU of adaptation layer
2) RB bearer identity (e.g., End-to-End Remote UE RB for UE to network relay or End-to-End Remote UE SL RB for UE to UE relay)
3) direction of the transmission (i.e., from a transmitter node to a receiver node or vice versa.)
4) integrity protection KEY.

Regarding the counter, a sequence number field may be introduced in the adaptation layer header. Alternatively, there is no sequence number field introduced, however, the transmitter node of a hop itself maintains a counter for counting the number of transmissions/PDUs which are transmitted. Meanwhile, the receiver node of the hop also needs to maintain a same counter for counting the number received PDUs. Both the transmitter node and the receiver node need to maintain a synchronized counter value (i.e., the counter value at the both nodes need to be same). In case synchronization is lost between a transmitter node and a receiver node, either of the both nodes may need to initiate a synchronization recovery procedure to exchange the counter value between them. As an alternative, both nodes may exchange the counter value periodically. Yet, as a further alternative, the relay path for which the security synchronization is lost is dropped/released.

For every received PDU of adaptation layer with the authentication code/token field, the receiver computes the authentication code value based on the same parameters as in the transmitter. The integrity verification is considered to be successful if the computed value is identical to the received authentication code in the PDU.

In the third embodiment, same as the second embodiment, the ciphering function (including ciphering and deciphering) introduced for adaptation layer. if the ciphering function is configured, it is the token field and the header of adaptation layer that is ciphered. The data part of the PDU is not to be protected, since it is already protected at the upper layer (i.e., PDCP layer). The same parameters as in the second embodiment are also required by adaptation layer for the ciphering function.

In the fourth embodiment, for any of the above embodiment, in case the header of adaptation layer is integrity protected or ciphered, in addition to the header, the data part of the PDU is also integrity protected or ciphered. In this case, the data part of the PDU may be integrity protected, or ciphered two times (i.e., one time is performed at the PDCP layer, one time is performed at the adaptation layer).

In the fifth embodiment, for any of the above embodiment, the integrity protection and/or the ciphering function at adaptation layer is extended for end to end protection. The end to end connection may comprise multiple hops. In this case, the protected UE IDs are known to all nodes on the same end to end connection.

In the sixth embodiment, a remote UE in a hop may be allocated with a local temporary ID by the gNB. Alternatively, it is configured by a coordinator UE node which is a UE node operating as coordinator in a proximity distance. Alternatively, it is configured by an application server. The configurations are signaled to nodes in an encrypted message (e.g., via dedicated RRC, PC5-S, or broadcast). In order to minimize the risk of disclosure of the UE ID in adaptation layer, this temporary local ID is carried in adaptation layer for indicating the PDU is transmitted by whom. In addition, the remote UE is configured that a temporary ID is only valid for a given time period (or a given number of transmissions or a given number of PDUs which are transmitted).

In an example, a temporary ID is only applied for one transmission. For a next transmission, the UE needs to change to a different temporary ID.

In another example, a temporary ID is only applied for every N transmissions. After N transmissions, transmission, the UE needs to change to a different temporary ID.

In another example, the temporary ID is only applied until a permanent one is received (i.e., the temporary and permanent ID are represented by two separate fields to be configured).

To reduce signaling overhead due to configuration/reconfiguration of the temporary UE ID, a remote UE may be configured with a list or a pool of temporary UE IDs. The UE can randomly select any of the temporary IDs for a transmission. A temporary ID may be cleared after a given number of transmissions/time period/number of PDUs which are transmitted. The temporary ID list or pool can be reconfigured to the UE from time to time when it is necessary. Alternatively, in case the transmitter node uses all the available temporary ID configured (or part of the available pool), the transmitter node needs to ask for a reconfiguration of the security parameters. This means that a temporary ID can be used only once and cannot be reused.

Alternatively, a temporary UE ID generation method is configured to a UE. The configuration is signaled by a coordinator UE node which is a UE node operating as coordinator in a proximity distance. Alternatively, the configuration is signaled by an application server. The configuration is signaled to nodes in an encrypted message (e.g., via dedicated RRC, PC5-S, or broadcast). Each UE/node can generate a temporary ID based on the configured method. The method may take the actual UE ID as an input. By applying the same method, a receiver UE or node can verify if a received temporary ID is valid or not.

In the seventh embodiment, a UE capability bit may be defined for indicating whether the UE supports integrity protection for adaptation layer. Multiple UE capability bits may be defined. Each capability bit indicates whether the UE support a specific integrity protection method.

In the eighth embodiment, for any of the above embodiments, some necessary configurations may be signaled to UEs by the gNB. Alternatively, they are signaled by a coordinator UE node which is a UE node operating as coordinator in a proximity distance. Alternatively, they are signaled by an application server. Alternatively, some configurations may be captured in a spec in a hard coded fashion.

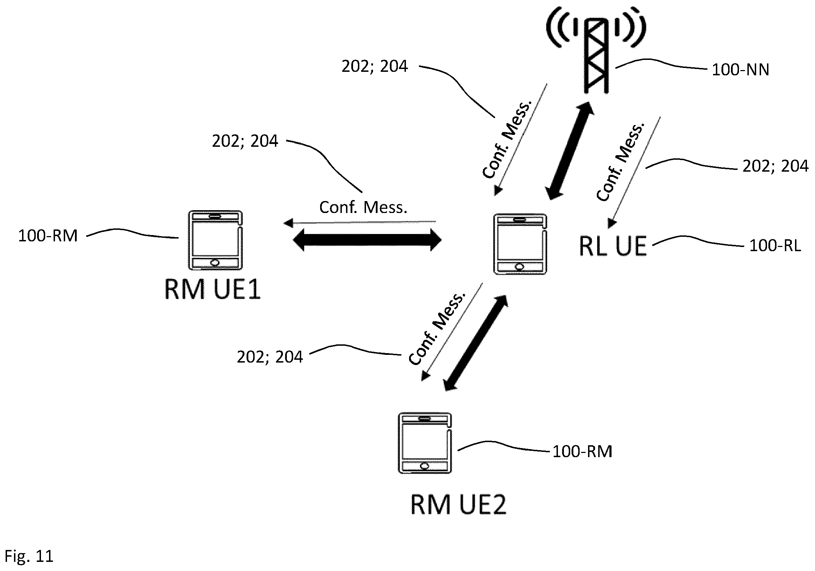

Fig. 11 schematically illustrates an example implementation of the receiving 202 or transmitting 204 the configuration message (optionally at the RX 100-RX or TX 100-TX in each case). The RAN (e.g., the network node 100-NN) may transmit a single configuration message that is forwarded by the RL radio device 100-RL to each of the at least two RM radio devices 100-RM. The configuration message transmitted by the network node 100-NN may be address to the RL radio device only.

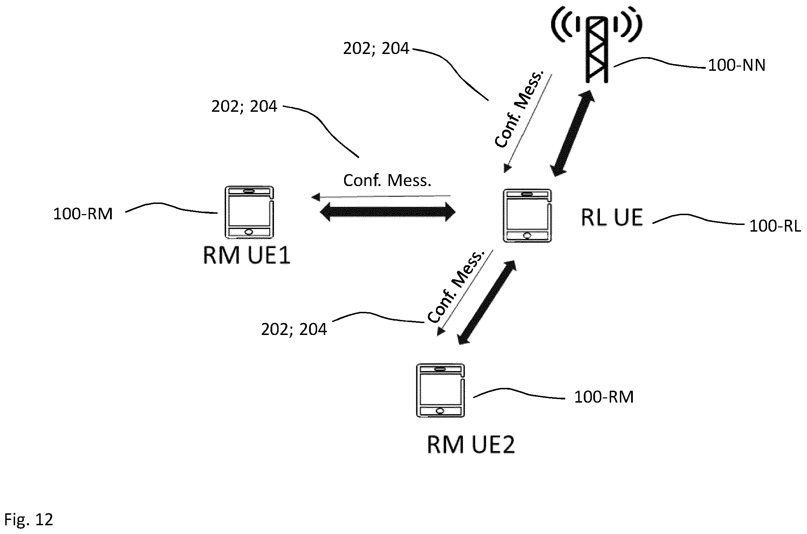

Fig. 12 schematically illustrates an example implementation of the receiving 202 or transmitting 204 the configuration message (optionally at the RX 100-RX or TX 100-TX in each case). The RAN (e.g., the network node 100-NN) may transmit a configuration message that is forwarded by the RL radio device 100-RL for each of the at least two RM radio devices 100-RM. The configuration message transmitted by the network node 100-NN may be address to the respective one of the RM radio device.

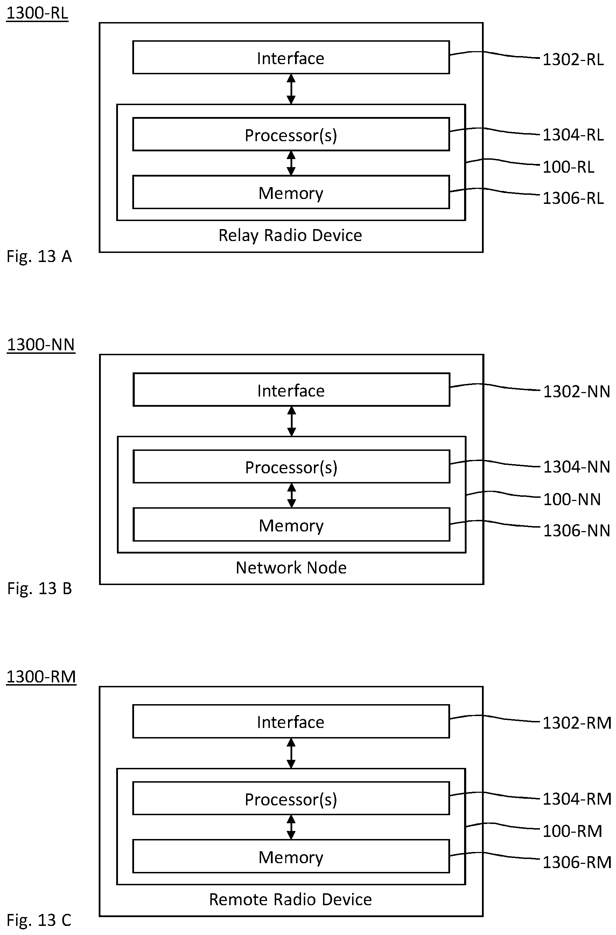

Fig. 13A shows a schematic block diagram for an embodiment of a relay radio device 100-RL. The device 100-RL comprises one or more processors 1304-RL for performing the method 200-TX and/or 200-RX (i.e., any of the aspects) and memory 1306-RL coupled to the processors 1304-RL. For example, the memory 1306-RL may be encoded with instructions that implement at least one of the units labeled 1xy-RX and/or 1xy-TX.

The one or more processors 1304-RL may be a combination of one or more of a microprocessor, controller, microcontroller, central processing unit, digital signal processor, application specific integrated circuit, field programmable gate array, or any other suitable computing device, resource, or combination of hardware, microcode and/or encoded logic operable to provide, either alone or in conjunction with other components of the device 100-RL, such as the memory 1306-RL, relay radio device functionality. For example, the one or more processors 1304-RL may execute instructions stored in the memory 1306-RL. Such functionality may include providing various features and steps discussed herein, including any of the benefits disclosed herein. The expression "the device being operative to perform an action" may denote the device 100-RL being configured to perform the action.

As schematically illustrated in Fig. 13A, the device 100-RL may be embodied by a RL radio device 1300-RL, e.g., functioning as a relay radio device. The RL radio device 1300-RL comprises a radio interface 1302-RL coupled to the device 100-RL for radio communication with one or more base stations or UEs.

Fig. 13B shows a schematic block diagram for an embodiment of the network node 100-NN. The network node 100-NN comprises one or more processors 1304-NN for performing the method 200-TX and/or 200-RX (i.e., any of the aspects) and memory 1306-NN coupled to the processors 1304-NN. For example, the memory 1306-NN may be encoded with instructions that implement at least one of the units labeled 1xy-RX and/or 1xy-TX.

The one or more processors 1304-NN may be a combination of one or more of a microprocessor, controller, microcontroller, central processing unit, digital signal processor, application specific integrated circuit, field programmable gate array, or any other suitable computing device, resource, or combination of hardware, microcode and/or encoded logic operable to provide, either alone or in conjunction with other components of the device 100-NN, such as the memory 1306-NN, RAN functionality. For example, the one or more processors 1304-NN may execute instructions stored in the memory 1306-NN. Such functionality may include providing various features and steps discussed herein, including any of the benefits disclosed herein. The expression "the network node being operative to perform an action" may denote the device 100-NN being configured to perform the action.

As schematically illustrated in Fig. 13B, the network node 100-NN may be embodied by a network node 1300-NN, e.g., functioning as a base station or a central unit. The network node 1300-NN comprises a radio interface 1302-NN coupled to the device 100-NN for radio communication with one or more base stations or UEs.

Fig. 13C shows a schematic block diagram for an embodiment of the remote radio device 100-RM. The device 100-RM comprises one or more processors 1304-RM for performing the method 200-TX and/or 200-RX (i.e., any of the aspects) and memory 1306-RM coupled to the processors 1304-RM. For example, the memory 1306-RM may be encoded with instructions that implement at least one of the units labeled 1xy-RX and/or 1xy-TX.

The one or more processors 1304-RM may be a combination of one or more of a microprocessor, controller, microcontroller, central processing unit, digital signal processor, application specific integrated circuit, field programmable gate array, or any other suitable computing device, resource, or combination of hardware, microcode and/or encoded logic operable to provide, either alone or in conjunction with other components of the device 100-RM, such as the memory 1306-RM, remote radio device functionality. For example, the one or more processors 1304-RM may execute instructions stored in the memory 1306-RM. Such functionality may include providing various features and steps discussed herein, including any of the benefits disclosed herein. The expression "the device being operative to perform an action" may denote the device 100-RM being configured to perform the action.

As schematically illustrated in Fig. 13C, the device 100-RM may be embodied by a RM-radio device 1300-RM, e.g., functioning as a base station or UE. The RM radio device 1300-RM comprises a radio interface 1302-RM coupled to the device 100-RM for radio communication with one or more base stations or UEs.

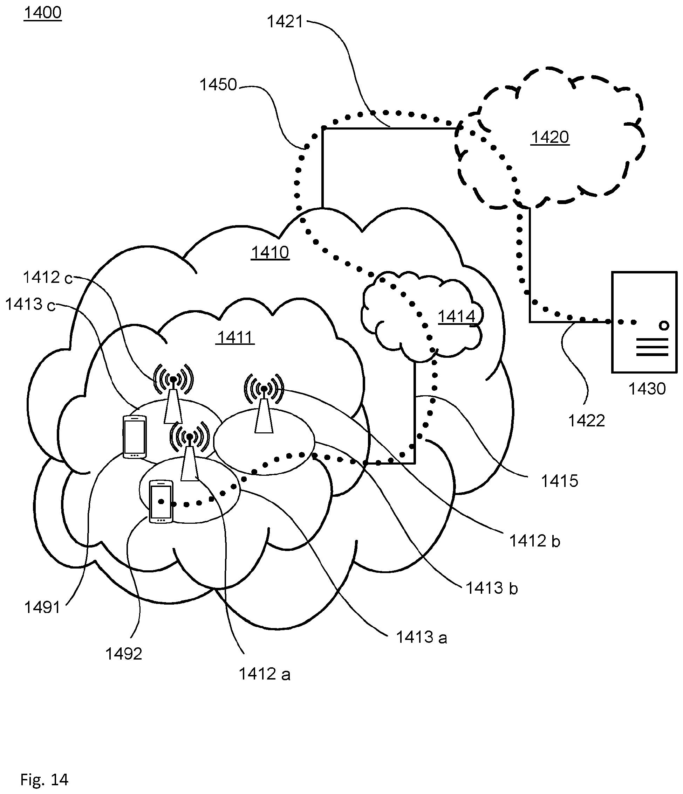

With reference to Fig. 14, in accordance with an embodiment, a communication system 1400 includes a telecommunication network 1410, such as a 3GPP-type cellular network, which comprises an access network 1411, such as a radio access network, and a core network 1414. The access network 1411 comprises a plurality of base stations 1412a, 1412b, 1412c, such as NBs, eNBs, gNBs or other types of wireless access points, each defining a corresponding coverage area 1413a, 1413b, 1413c. Each base station 1412a, 1412b, 1412c is connectable to the core network 1414 over a wired or wireless connection 1415. A first user equipment (UE) 1491 located in coverage area 1413c is configured to wirelessly connect to, or be paged by, the corresponding base station 1412c. A second UE 1492 in coverage area 1413a is wirelessly connectable to the corresponding base station 1412a. While a plurality of UEs 1491, 1492 are illustrated in this example, the disclosed embodiments are equally applicable to a situation where a sole UE is in the coverage area or where a sole UE is connecting to the corresponding base station 1412.

The telecommunication network 1410 is itself connected to a host computer 1430, which may be embodied in the hardware and/or software of a standalone server, a cloud-implemented server, a distributed server or as processing resources in a server farm. The host computer 1430 may be under the ownership or control of a service provider, or may be operated by the service provider or on behalf of the service provider. The connections 1421, 1422 between the telecommunication network 1410 and the host computer 1430 may extend directly from the core network 1414 to the host computer 1430 or may go via an optional intermediate network 1420. The intermediate network 1420 may be one of, or a combination of more than one of, a public, private or hosted network; the intermediate network 1420, if any, may be a backbone network or the Internet; in particular, the intermediate network 1420 may comprise two or more sub-networks (not shown).

The communication system 1400 of Fig. 14 as a whole enables connectivity between one of the connected UEs 1491, 1492 and the host computer 1430. The connectivity may be described as an over-the-top (OTT) connection 1450. The host computer 1430 and the connected UEs 1491, 1492 are configured to communicate data and/or signaling via the OTT connection 1450, using the access network 1411, the core network 1414, any intermediate network 1420 and possible further infrastructure (not shown) as intermediaries. The OTT connection 1450 may be transparent in the sense that the participating communication devices through which the OTT connection 1450 passes are unaware of routing of uplink and downlink communications. For example, a base station 1412 need not be informed about the past routing of an incoming downlink communication with data originating from a host computer 1430 to be forwarded (e.g., handed over) to a connected UE 1491. Similarly, the base station 1412 need not be aware of the future routing of an outgoing uplink communication originating from the UE 1491 towards the host computer 1430.

By virtue of the devices 100-RL, 100-NN and 100-RM being embodied by any one of the UEs 1491 or 1492 and/or any one of the base stations 1412, the performance of the OTT connection 1450 can be improved, e.g., in terms of increased throughput and/or reduced latency.

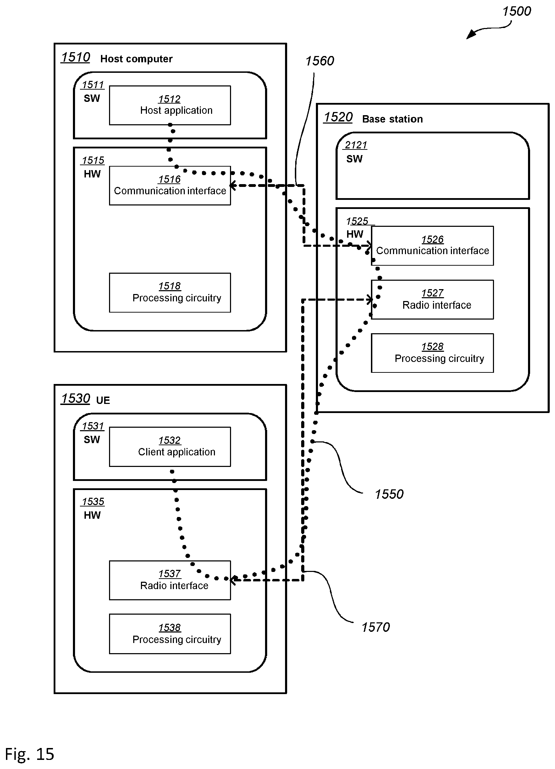

Example implementations, in accordance with an embodiment, of the UE, base station and host computer discussed in the preceding paragraphs will now be described with reference to Fig. 15. In a communication system 1500, a host computer 1510 comprises hardware 1515 including a communication interface 1516 configured to set up and maintain a wired or wireless connection with an interface of a different communication device of the communication system 1500. The host computer 1510 further comprises processing circuitry 1518, which may have storage and/or processing capabilities. In particular, the processing circuitry 1518 may comprise one or more programmable processors, application-specific integrated circuits, field programmable gate arrays or combinations of these (not shown) adapted to execute instructions. The host computer 1510 further comprises software 1511, which is stored in or accessible by the host computer 1510 and executable by the processing circuitry 1518. The software 1511 includes a host application 1512. The host application 1512 may be operable to provide a service to a remote user, such as a UE 1530 connecting via an OTT connection 1550 terminating at the UE 1530 and the host computer 1510. In providing the service to the remote user, the host application 1512 may provide user data, which is transmitted using the OTT connection 1550. The user data may depend on the location of the UE 1530. The user data may comprise auxiliary information or precision advertisements (also: ads) delivered to the UE 1530. The location may be reported by the UE 1530 to the host computer, e.g., using the OTT connection 1550, and/or by the base station 1520, e.g., using a connection 1560.

The communication system 1500 further includes a base station 1520 provided in a telecommunication system and comprising hardware 1525 enabling it to communicate with the host computer 1510 and with the UE 1530. The hardware 1525 may include a communication interface 1526 for setting up and maintaining a wired or wireless connection with an interface of a different communication device of the communication system 1500, as well as a radio interface 1527 for setting up and maintaining at least a wireless connection 1570 with a UE 1530 located in a coverage area (not shown in Fig. 15) served by the base station 1520. The communication interface 1526 may be configured to facilitate a connection 1560 to the host computer 1510. The connection 1560 may be direct or it may pass through a core network (not shown in Fig. 15) of the telecommunication system and/or through one or more intermediate networks outside the telecommunication system. In the embodiment shown, the hardware 1525 of the base station 1520 further includes processing circuitry 1528, which may comprise one or more programmable processors, application-specific integrated circuits, field programmable gate arrays or combinations of these (not shown) adapted to execute instructions. The base station 1520 further has software 1521 stored internally or accessible via an external connection.

The communication system 1500 further includes the UE 1530 already referred to. Its hardware 1535 may include a radio interface 1537 configured to set up and maintain a wireless connection 1570 with a base station serving a coverage area in which the UE 1530 is currently located. The hardware 1535 of the UE 1530 further includes processing circuitry 1538, which may comprise one or more programmable processors, application-specific integrated circuits, field programmable gate arrays or combinations of these (not shown) adapted to execute instructions. The UE 1530 further comprises software 1531, which is stored in or accessible by the UE 1530 and executable by the processing circuitry 1538. The software 1531 includes a client application 1532. The client application 1532 may be operable to provide a service to a human or non-human user via the UE 1530, with the support of the host computer 1510. In the host computer 1510, an executing host application 1512 may communicate with the executing client application 1532 via the OTT connection 1550 terminating at the UE 1530 and the host computer 1510. In providing the service to the user, the client application 1532 may receive request data from the host application 1512 and provide user data in response to the request data. The OTT connection 1550 may transfer both the request data and the user data. The client application 1532 may interact with the user to generate the user data that it provides.

It is noted that the host computer 1510, base station 1520 and UE 1530 illustrated in Fig. 15 may be identical to the host computer 1430, one of the base stations 1412a, 1412b, 1412c and one of the UEs 1491, 1492 of Fig. 14, respectively. This is to say, the inner workings of these entities may be as shown in Fig. 15 and independently, the surrounding network topology may be that of Fig. 14.

In Fig. 15, the OTT connection 1550 has been drawn abstractly to illustrate the communication between the host computer 1510 and the use equipment 1530 via the base station 1520, without explicit reference to any intermediary devices and the precise routing of messages via these devices. Network infrastructure may determine the routing, which it may be configured to hide from the UE 1530 or from the service provider operating the host computer 1510, or both. While the OTT connection 1550 is active, the network infrastructure may further take decisions by which it dynamically changes the routing (e.g., on the basis of load balancing consideration or reconfiguration of the network).

The wireless connection 1570 between the UE 1530 and the base station 1520 is in accordance with the teachings of the embodiments described throughout this disclosure. One or more of the various embodiments improve the performance of OTT services provided to the UE 1530 using the OTT connection 1550, in which the wireless connection 1570 forms the last segment. More precisely, the teachings of these embodiments may reduce the latency and improve the data rate and thereby provide benefits such as better responsiveness.

A measurement procedure may be provided for the purpose of monitoring data rate, latency and other factors on which the one or more embodiments improve. There may further be an optional network functionality for reconfiguring the OTT connection 1550 between the host computer 1510 and UE 1530, in response to variations in the measurement results. The measurement procedure and/or the network functionality for reconfiguring the OTT connection 1550 may be implemented in the software 1511 of the host computer 1510 or in the software 1531 of the UE 1530, or both. In embodiments, sensors (not shown) may be deployed in or in association with communication devices through which the OTT connection 1550 passes; the sensors may participate in the measurement procedure by supplying values of the monitored quantities exemplified above, or supplying values of other physical quantities from which software 1511, 1531 may compute or estimate the monitored quantities. The reconfiguring of the OTT connection 1550 may include message format, retransmission settings, preferred routing etc.; the reconfiguring need not affect the base station 1520, and it may be unknown or imperceptible to the base station 1520. Such procedures and functionalities may be known and practiced in the art. In certain embodiments, measurements may involve proprietary UE signaling facilitating the host computer's 1510 measurements of throughput, propagation times, latency and the like. The measurements may be implemented in that the software 1511, 1531 causes messages to be transmitted, in particular empty or "dummy" messages, using the OTT connection 1550 while it monitors propagation times, errors etc.

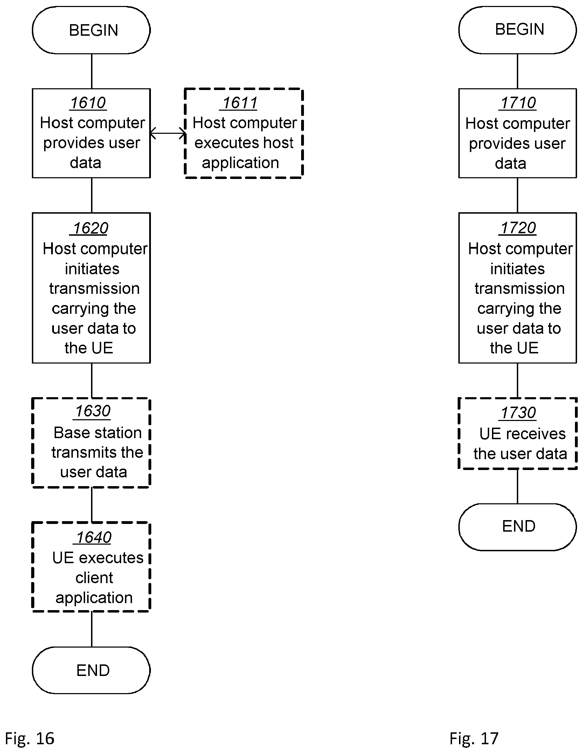

Fig. 16 is a flowchart illustrating a method implemented in a communication system, in accordance with one embodiment. The communication system includes a host computer, a base station and a UE which may be those described with reference to Fig. 14 and 15. For simplicity of the present disclosure, only drawing references to Fig. 16 will be included in this section. In a first step 1610 of the method, the host computer provides user data. In an optional substep 1611 of the first step 1610, the host computer provides the user data by executing a host application. In a second step 1620, the host computer initiates a transmission carrying the user data to the UE. In an optional third step 1630, the base station transmits to the UE the user data which was carried in the transmission that the host computer initiated, in accordance with the teachings of the embodiments described throughout this disclosure. In an optional fourth step 1640, the UE executes a client application associated with the host application executed by the host computer.

Fig. 17 is a flowchart illustrating a method implemented in a communication system, in accordance with one embodiment. The communication system includes a host computer, a base station and a UE which may be those described with reference to Figs. 14 and 15. For simplicity of the present disclosure, only drawing references to Fig. 16 will be included in this section. In a first step 1710 of the method, the host computer provides user data. In an optional substep (not shown) the host computer provides the user data by executing a host application. In a second step 1720, the host computer initiates a transmission carrying the user data to the UE. The transmission may pass via the base station, in accordance with the teachings of the embodiments described throughout this disclosure. In an optional third step 1730, the UE receives the user data carried in the transmission.

As has become apparent from above description, embodiments of the technique allow for a relay mechanism that ensures integrity of the PDU header of the protocol layer that is responsible for relaying the PDU (e.g., an adaptation layer). The security protection at adaptation layer can be improved.

Same or further embodiments can avoid fake RRC connection setup towards RAN due to disclosing of a UE ID at the relay link.

Same or further embodiments can avoid fake and/or malicious sidelink connection establishments in UE to UE relay scenarios.

Same or further embodiments can avoid overloading the available bandwidth and/or channel (e.g., of the SL) and/or can avoid wasting radio resources.

Many advantages of the present invention will be fully understood from the foregoing description, and it will be apparent that various changes may be made in the form, construction and arrangement of the units and devices without departing from the scope of the invention and/or without sacrificing all of its advantages. Since the invention can be varied in many ways, it will be recognized that the invention should be limited only by the scope of the following claims.

## Claims

1. A method (200-TX) of protecting integrity of a header of a data unit, DU, at an adaptation layer for a relayed radio communication between a remote radio device (100-RM) and a radio access network, RAN (100-NN), or a further radio device (100-RM) through a relay radio device (100-RL), the method (200-TX) comprising or initiating the steps of:
obtaining (206-TX), at a transmitter, TX (100-TX), a DU from a transparent layer, wherein the relayed radio communication uses a protocol stack comprising the adaptation layer below the transparent layer that is relayed transparently at the relay radio device (100-RL);
protecting (208-TX), at the adaptation layer of the TX (100-TX), the integrity of the header of the DU by including a token in the header of the DU at the adaptation layer, the token comprising a local temporary identifier, ID, of the remote radio device (100-RM) allocated with the local temporary ID by a base station of the RAN (100-NN), wherein the integrity-protected header is attached to the DU obtained (206-TX) from the transparent layer; and
transmitting (212-TX), from the TX (100-TX), the DU comprising the integrity-protected header to a receiver, RX (100-RX).

2. The method (200-TX) of claim 1, wherein at least one of the integrity-protection (208-TX), the integrity-protected header, and the token has a limited validity and/or is valid for at least one of:
a predefined time period;
a predefined number of integrity protected headers of DUs at the adaptation layer; and
a predefined number of transmissions of one or more DUs, optionally wherein the predefined number of transmission of one or more DUs comprises only initial transmissions.

3. The method (200-TX) of any one of claims 1 to 2, wherein the integrity protecting (208-TX) is configured by a central unit of the relayed radio communication, the RAN (100-NN) or the further radio device (100-RM); and/or
wherein the token is configured by the RAN (100-NN), optionally by a base station (100-NN) of the RAN; and/or
wherein the token is configured by a coordinator radio device, which is a radio device node operating a coordinator in a proximity; and/or
wherein the token is configured by an application server (1430; 1510).

4. The method (200-TX) of any one of claims 1 to 3, wherein the local temporary ID is only applied for one transmission (212-TX), and wherein for a next transmission (212-TX), the TX (100-TX) needs to change to a different temporary ID; and/or
wherein the local temporary ID is only applied for every N transmissions (212-TX), and wherein after N transmissions (212-TX), the TX (100-TX) needs to change to a different temporary ID; and/or
wherein the local temporary ID is only applied until a permanent one is received; and/or
wherein the transparent layer comprises a packet data convergence protocol, PDCP, layer; and/or
wherein the DU comprises a packet data unit, PDU.

5. The method (200-TX) of any one of claims 1 to 4, further comprising or initiating the step of:
transmitting (204-TX), from the TX (100-TX) to the RX (100-RX), a configuration message,
optionally wherein the configuration message is indicative of at least one of a configuration of the protecting (208-TX) and one or more parameters of the protecting (208-TX), and/or
optionally wherein the configuration message is indicative that the adaptation layer of the TX (100-TX) is capable of performing the protecting (208-TX), and/or
optionally wherein the configuration message comprises or is indicative of the token; and/or
further comprising or initiating, preferably at the adaptation layer:
generating the token based on at least one of the local temporary ID of the TX (100-TX), and the local temporary ID of the RX (100-RX); and/or
wherein the token is a hash value of at least one of the local temporary ID of the TX (100-TX), and the local temporary ID of the RX (100-RX).

6. The method (200-TX) of any one of claims 1 to 5, wherein the token further comprises at least one of:
a sequence number of the DU at the adaptation layer;
a radio bearer, RB, identity;
a direction of transmission of the DU; and
an integrity protection key.

7. The method (200-TX) of any one of claims 1 to 6, further comprising or initiating the step of:
receiving (202-TX), at the TX (100-TX) from the RX (100-RX), a configuration message,
optionally wherein the configuration message is indicative of at least one of a configuration of the protecting (208-TX) and/or one or more parameters of the protecting (208-TX), and/or
optionally wherein the configuration message is indicative that an adaptation layer of the RX (100-RX) is capable of validating (216-RX) at least one of the token, the header and the DU.

8. The method (200-TX) of any one of claims 1 to 7, wherein the method (200-TX) is performed by the remote radio device (100-RM) as the TX (100-TX).

9. A method (200-RX) of validating integrity of a header of a data unit, DU, at an adaptation layer for a relayed radio communication between a remote radio device (100-RM) and a radio access network, RAN (100-NN), or a further radio device (100-RM) through a relay radio device (100-RL), the method (200-RX) comprising or initiating the steps of:
receiving (212-RX), from a transmitter, TX (100-TX), the DU comprising an integrity-protected header at a receiver, RX (100-RX), the integrity-protected header including a token in the header of the DU at the adaptation layer, the token comprising a local temporary identifier, ID, of the remote radio device (100-RM) allocated with the local temporary ID by a base station of the RAN (100-NN);
validating (216-RX), at the adaptation layer of the RX (100-RX), the integrity of the integrity-protected header of the DU, wherein the integrity-protected header is detached from the DU received (212-RX) from the TX (100-TX); and
providing (218-RX), at the RX (100-RX), the DU to a transparent layer, wherein the relayed radio communication uses a protocol stack comprising the adaptation layer below the transparent layer that is relayed transparently at the relay radio device (100-RL).

10. The method (200-RX) of claim 9, wherein at least one of the steps of providing and detaching is selectively performed, optionally responsive to a result of the validating, if the result is indicative of the validity of the header; and/or
further comprising or initiating the step of:
discarding (218-RX) the DU if the validation (214-RX) is negative.

11. The method (200-RX) of claim 9 or 10, further comprising or initiating the step of:
receiving (202-RX), from the TX (100-TX) at the RX (100-RX), a configuration message,
optionally wherein the configuration message is indicative of at least one of a configuration of the validating (216-RX) and/or one or more parameters of the validating (216-RX), and/or
optionally wherein the configuration message is indicative that the adaptation layer of the TX (100-TX) is capable of performing the protecting (208-TX); and/or
further comprising or initiating the step of:
transmitting (204-TX), from the RX (100-RX) to the TX (100-TX), a configuration message,
optionally wherein the configuration message is indicative of at least one of a configuration of the validating (216-RX) and/or one or more parameters of the validating (216-RX), and/or
optionally wherein the configuration message is indicative that an adaptation layer of the RX (100-RX) is capable of validating (216-RX) at least one of the token, the header and the DU; and/or
wherein the validating comprises or initiates:
comparing a configured token and a token included in the header.

12. The method (200-RX) of any one of claims 9 to 11, further comprising or initiating the steps and/or features of any one of claims 2 to 8, or steps and/or features corresponding thereto.

13. A device (100-TX) for protecting integrity of a header of a data unit, DU, at an adaptation layer for a relayed radio communication between a remote radio device (100-RM) and a radio access network, RAN (100-NN), or a further radio device (100-RM) through a relay radio device (100-RL), the device (100-TX) being configured to:
obtain, at a transmitter, TX (100-TX), a DU from a transparent layer, wherein the relayed radio communication uses a protocol stack comprising the adaptation layer below the transparent layer that is relayed transparently at the relay radio device (100-RL);
protect, at the adaptation layer of the TX (100-TX), the integrity of the header of the DU by including a token in the header of the DU at the adaptation layer, the token comprising a local temporary identifier, ID, of the remote radio device (100-RM) allocated with the local temporary ID by a base station of the RAN (100-NN), wherein the integrity-protected header is attached to the DU obtained (206-TX) from the transparent layer; and
transmit, from the TX (100-TX), the DU comprising the integrity-protected header to a receiver, RX (100-RX).

14. The device (100-TX) of claim 13, further configured to perform the steps of any one of claims 2 to 8.

15. A device (100-RX) for validating integrity of a header of a data unit, DU, at an adaptation layer for a relayed radio communication between a remote radio device (100-RM) and a radio access network, RAN (100-NN), or a further radio device (100-RM) through a relay radio device (100-RL), the device (100-RX) being configured to:
receive, from a transmitter, TX (100-TX), the DU comprising an integrity-protected header at a receiver, RX (100-RX), the integrity-protected header including a token in the header of the DU at the adaptation layer, the token comprising a local temporary identifier, ID, of the remote radio device (100-RM) allocated with the local temporary ID by a base station of the RAN (100-NN);
validate, at the adaptation layer of the RX (100-RX), the integrity of the integrity-protected header of the DU, wherein the integrity-protected header is detached from the DU received (212-RX) from the TX (100-TX); and
provide, at the RX (100-RX), the DU to a transparent layer, wherein the relayed radio communication uses a protocol stack comprising the adaptation layer below the transparent layer that is relayed transparently at the relay radio device (100-RL).

16. The device (100-RX) of claim 15, further configured to perform the steps of claim 10 to 12.

17. A communication system (300; 1400; 1500) including a host computer (1430; 1510) comprising:
processing circuitry (1518) configured to provide user data; and
a communication interface (1516) configured to forward user data to a cellular or ad hoc radio network (1450; 1550) for transmission to a user equipment, UE, (100-RL; 100-NN; 100-RM; 1300-RL; 1300-NN; 1300-RM; 1491; 1492; 1530) wherein the UE (100-RL; 100-NN; 100-RM; 1300-RL; 1300-NN; 1300-RM; 1491; 1492; 1530) comprises a radio interface (1302-RL; 1302-NN; 1302-RM; 1537) and processing circuitry (1304-RL; 1304-NN; 1304-RM; 1538), the processing circuitry (1304-RL; 1304-NN; 1304-RM; 1538) of the UE (100-RL; 100-NN; 100-RM; 1300-RL; 1300-NN; 1300-RM; 1491; 1492; 1530) being configured to execute the steps of any one of claims 1 to 8 or 9 to 12.

## Patentansprüche

1. Ein Verfahren (200-TX) zum Schützen der Integrität eines Headers einer Dateneinheit, DU, an einer Anpassungsschicht für eine weitergeleitete Funkkommunikation zwischen einer entfernten Funkvorrichtung (100-RM) und einem Funkzugangsnetz, RAN (100-NN), oder einer weiteren Funkvorrichtung (100-RM) durch eine Relay-Funkvorrichtung (100-RL), wobei das Verfahren (200-TX) die folgenden Schritte beinhaltet oder initiiert:
Erhalten (206-TX), an einem Sender, TX (100-TX), einer DU von einer transparenten Schicht, wobei die weitergeleitete Funkkommunikation einen Protokollstapel verwendet, der die Anpassungsschicht unterhalb der transparenten Schicht beinhaltet, die an der Relay-Funkvorrichtung (100-RL) transparent weitergeleitet wird;
Schützen (208-TX), an der Anpassungsschicht des TX (100-TX), der Integrität des Headers der DU durch Einschließen eines Tokens in den Header der DU an der Anpassungsschicht, wobei das Token eine lokale temporäre Kennung, ID, der entfernten Funkvorrichtung (100-RM) beinhaltet, der die lokale temporäre ID durch eine Basisstation des RAN (100-NN) zugewiesen ist, wobei der integritätsgeschützte Header an die DU angehängt wird, die von der transparenten Schicht erhalten wird (206-TX); und
Übertragen (212-TX), von dem TX (100-TX), der DU, die den integritätsgeschützten Header beinhaltet, an einen Empfänger, RX (100-RX).

2. Verfahren (200-TX) gemäß Anspruch 1, wobei mindestens eines von dem Integritätsschutz (208-TX), dem integritätsgeschützten Header und dem Token eine begrenzte Gültigkeit aufweist und/oder für mindestens eines von Folgendem gültig ist:
einem vordefinierten Zeitraum;
einer vordefinierten Anzahl von integritätsgeschützten Headern von DUs an der Anpassungsschicht; und
einer vordefinierten Anzahl von Übertragungen von einer oder mehreren DUs, wobei optional die vordefinierte Anzahl von Übertragungen von einer oder mehreren DUs nur anfängliche Übertragungen beinhaltet.

3. Verfahren (200-TX) gemäß einem der Ansprüche 1 bis 2, wobei das Integritätsschützen (208-TX) durch eine Zentraleinheit der weitergeleiteten Funkkommunikation, das RAN (100-NN) oder die weitere Funkvorrichtung (100-RM) konfiguriert wird; und/oder
wobei das Token durch das RAN (100-NN), optional durch eine Basisstation (100-NN) des RAN, konfiguriert wird; und/oder
wobei das Token durch eine Koordinator-Funkvorrichtung konfiguriert wird, die ein Funkvorrichtungsknoten ist, der einen Koordinator in einer Nähe betreibt; und/oder
wobei das Token durch einen Anwendungsserver (1430; 1510) konfiguriert wird.

4. Verfahren (200-TX) gemäß einem der Ansprüche 1 bis 3, wobei die lokale temporäre ID nur für eine Übertragung (212-TX) angewendet wird und wobei für eine nächste Übertragung (212-TX) der TX (100-TX) zu einer anderen temporären ID wechseln muss; und/oder
wobei die lokale temporäre ID nur für jeweils N Übertragungen (212-TX) angewendet wird und wobei nach N Übertragungen (212-TX) der TX (100-TX) zu einer anderen temporären ID wechseln muss; und/oder
wobei die lokale temporäre ID nur angewendet wird, bis eine permanente empfangen wird; und/oder
wobei die transparente Schicht eine Paketdatenkonvergenzprotokollschicht, PDCP-Schicht, beinhaltet; und/oder
wobei die DU eine Paketdateneinheit, PDU, beinhaltet.

5. Verfahren (200-TX) gemäß einem der Ansprüche 1 bis 4, das ferner den folgenden Schritt beinhaltet oder initiiert:
Übertragen (204-TX), von dem TX (100-TX) an den RX (100-RX), einer Konfigurationsnachricht,
wobei optional die Konfigurationsnachricht mindestens eines von einer Konfiguration des Schützens (208-TX) und einem oder mehreren Parametern des Schützens (208-TX) angibt und/oder
wobei optional die Konfigurationsnachricht angibt, dass die Anpassungsschicht des TX (100-TX) in der Lage ist, das Schützen (208-TX) durchzuführen, und/oder wobei optional die Konfigurationsnachricht das Token beinhaltet oder angibt; und/oder ferner beinhaltend oder initiierend, vorzugsweise an der Anpassungsschicht:
Erzeugen des Tokens basierend auf mindestens einem von der lokalen temporären ID des TX (100-TX) und der lokalen temporären ID des RX (100-RX); und/oder wobei das Token ein Hash-Wert von mindestens einem von der lokalen temporären ID des TX (100-TX) und der lokalen temporären ID des RX (100-RX) ist.

6. Verfahren (200-TX) gemäß einem der Ansprüche 1 bis 5, wobei das Token ferner mindestens eines von Folgendem beinhaltet:
eine Sequenznummer der DU an der Anpassungsschicht;
eine Funkträgeridentität, RB-Identität;
eine Richtung der Übertragung der DU; und
einen Integritätsschutzschlüssel.

7. Verfahren (200-TX) gemäß einem der Ansprüche 1 bis 6, das ferner den folgenden Schritt beinhaltet oder initiiert:
Empfangen (202-TX), an dem TX (100-TX) von dem RX (100-RX), einer Konfigurationsnachricht,
wobei optional die Konfigurationsnachricht mindestens eines von einer Konfiguration des Schützens (208-TX) und/oder einem oder mehreren Parametern des Schützens (208-TX) angibt und/oder
wobei optional die Konfigurationsnachricht angibt, dass eine Anpassungsschicht des RX (100-RX) in der Lage ist, mindestens eines von dem Token, dem Header und der DU zu validieren (216-RX).

8. Verfahren (200-TX) gemäß einem der Ansprüche 1 bis 7, wobei das Verfahren (200-TX) durch die entfernte Funkvorrichtung (100-RM) als der TX (100-TX) durchgeführt wird.

9. Ein Verfahren (200-RX) zum Validieren der Integrität eines Headers einer Dateneinheit, DU, an einer Anpassungsschicht für eine weitergeleitete Funkkommunikation zwischen einer entfernten Funkvorrichtung (100-RM) und einem Funkzugangsnetz, RAN (100-NN), oder einer weiteren Funkvorrichtung (100-RM) durch eine Relay-Funkvorrichtung (100-RL), wobei das Verfahren (200-RX) die folgenden Schritte beinhaltet oder initiiert:
Empfangen (212-RX), von einem Sender, TX (100-TX), der DU, die einen integritätsgeschützten Header beinhaltet, an einem Empfänger, RX (100-RX), wobei der integritätsgeschützte Header ein Token in dem Header der DU an der Anpassungsschicht umfasst, wobei das Token eine lokale temporäre Kennung, ID, der entfernten Funkvorrichtung (100-RM) beinhaltet, der die lokale temporäre ID durch eine Basisstation des RAN (100-NN) zugewiesen ist;
Validieren (216-RX), an der Anpassungsschicht des RX (100-RX), der Integrität des integritätsgeschützten Headers der DU, wobei der integritätsgeschützte Header von der DU abgetrennt wird, die von dem TX (100-TX) empfangen wird (212-RX); und
Bereitstellen (218-RX), an dem RX (100-RX), der DU an eine transparente Schicht, wobei die weitergeleitete Funkkommunikation einen Protokollstapel verwendet, der die Anpassungsschicht unterhalb der transparenten Schicht beinhaltet, die an der Relay-Funkvorrichtung (100-RL) transparent weitergeleitet wird.

10. Verfahren (200-RX) gemäß Anspruch 9, wobei mindestens einer der Schritte des Bereitstellens und Abtrennens selektiv durchgeführt wird, optional als Reaktion auf ein Ergebnis des Validierens, wenn das Ergebnis die Gültigkeit des Headers angibt; und/oder
ferner beinhaltend oder initiierend den folgenden Schritt:
Verwerfen (218-RX) der DU, wenn die Validierung (214-RX) negativ ist.

11. Verfahren (200-RX) gemäß Anspruch 9 oder 10, das ferner den folgenden Schritt beinhaltet oder initiiert:
Empfangen (202-RX), von dem TX (100-TX) an dem RX (100-RX), einer Konfigurationsnachricht,
wobei optional die Konfigurationsnachricht mindestens eines von einer Konfiguration des Validierens (216-RX) und/oder einem oder mehreren Parametern des Validierens (216-RX) angibt und/oder
wobei optional die Konfigurationsnachricht angibt, dass die Anpassungsschicht des TX (100-TX) in der Lage ist, das Schützen (208-TX) durchzuführen; und/oder ferner beinhaltend oder initiierend den folgenden Schritt:
Übertragen (204-TX), von dem RX (100-RX) an den TX (100-TX), einer Konfigurationsnachricht,
wobei optional die Konfigurationsnachricht mindestens eines von einer Konfiguration des Validierens (216-RX) und/oder einem oder mehreren Parametern des Validierens (216-RX) angibt und/oder
wobei optional die Konfigurationsnachricht angibt, dass eine Anpassungsschicht des RX (100-RX) in der Lage ist, mindestens eines von dem Token, dem Header und der DU zu validieren (216-RX); und/oder
wobei das Validieren Folgendes beinhaltet oder initiiert:
Vergleichen eines konfigurierten Tokens und eines in dem Header umfassten Tokens.

12. Verfahren (200-RX) gemäß einem der Ansprüche 9 bis 11, das ferner die Schritte und/oder Merkmale gemäß einem der Ansprüche 2 bis 8 oder Schritte und/oder Merkmale, die diesen entsprechen, beinhaltet oder initiiert.

13. Eine Vorrichtung (100-TX) zum Schützen der Integrität eines Headers einer Dateneinheit, DU, an einer Anpassungsschicht für eine weitergeleitete Funkkommunikation zwischen einer entfernten Funkvorrichtung (100-RM) und einem Funkzugangsnetz, RAN (100-NN), oder einer weiteren Funkvorrichtung (100-RM) durch eine Relay-Funkvorrichtung (100-RL), wobei die Vorrichtung (100-TX) für Folgendes konfiguriert ist:
Erhalten, an einem Sender, TX (100-TX), einer DU von einer transparenten Schicht, wobei die weitergeleitete Funkkommunikation einen Protokollstapel verwendet, der die Anpassungsschicht unterhalb der transparenten Schicht beinhaltet, die an der Relay-Funkvorrichtung (100-RL) transparent weitergeleitet wird;
Schützen, an der Anpassungsschicht des TX (100-TX), der Integrität des Headers der DU durch Einschließen eines Tokens in den Header der DU an der Anpassungsschicht, wobei das Token eine lokale temporäre Kennung, ID, der entfernten Funkvorrichtung (100-RM) beinhaltet, der die lokale temporäre ID durch eine Basisstation des RAN (100-NN) zugewiesen ist,
wobei der integritätsgeschützte Header an die DU angehängt wird, die von der transparenten Schicht erhalten wird (206-TX); und
Übertragen, von dem TX (100-TX), der DU, die den integritätsgeschützten Header beinhaltet, an einen Empfänger, RX (100-RX).

14. Vorrichtung (100-TX) gemäß Anspruch 13, die ferner konfiguriert ist, um die Schritte gemäß einem der Ansprüche 2 bis 8 durchzuführen.

15. Eine Vorrichtung (100-RX) zum Validieren der Integrität eines Headers einer Dateneinheit, DU, an einer Anpassungsschicht für eine weitergeleitete Funkkommunikation zwischen einer entfernten Funkvorrichtung (100-RM) und einem Funkzugangsnetz, RAN (100-NN), oder einer weiteren Funkvorrichtung (100-RM) durch eine Relay-Funkvorrichtung (100-RL), wobei die Vorrichtung (100-RX) für Folgendes konfiguriert ist:
Empfangen, von einem Sender, TX (100-TX), der DU, die einen integritätsgeschützten Header beinhaltet, an einem Empfänger, RX (100-RX), wobei der integritätsgeschützte Header ein Token in dem Header der DU an der Anpassungsschicht umfasst, wobei das Token eine lokale temporäre Kennung, ID, der entfernten Funkvorrichtung (100-RM) beinhaltet, der die lokale temporäre ID durch eine Basisstation des RAN (100-NN) zugewiesen ist;
Validieren, an der Anpassungsschicht des RX (100-RX), der Integrität des integritätsgeschützten Headers der DU, wobei der integritätsgeschützte Header von der DU abgetrennt wird, die von dem TX (100-TX) empfangen wird (212-RX); und
Bereitstellen, an dem RX (100-RX), der DU an eine transparente Schicht, wobei die weitergeleitete Funkkommunikation einen Protokollstapel verwendet, der die Anpassungsschicht unterhalb der transparenten Schicht beinhaltet, die an der Relay-Funkvorrichtung (100-RL) transparent weitergeleitet wird.

16. Vorrichtung (100-RX) gemäß Anspruch 15, die ferner konfiguriert ist, um die Schritte gemäß den Ansprüchen 10 bis 12 durchzuführen.

17. Ein Kommunikationssystem (300; 1400; 1500), das einen Host-Computer (1430; 1510) umfasst, der Folgendes beinhaltet:
eine Verarbeitungsschaltung (1518), die konfiguriert ist, um Benutzerdaten bereitzustellen; und
eine Kommunikationsschnittstelle (1516), die konfiguriert ist, um Benutzerdaten an ein zellulares oder Ad-hoc-Funknetz (1450; 1550) zur Übertragung an ein Benutzergerät, UE, (100-RL; 100-NN; 100-RM; 1300-RL; 1300-NN; 1300-RM; 1491; 1492; 1530) weiterzuleiten, wobei das UE (100-RL; 100-NN; 100-RM; 1300-RL; 1300-NN; 1300-RM; 1491; 1492; 1530) Folgendes beinhaltet: eine Funkschnittstelle (1302-RL; 1302-NN; 1302-RM; 1537) und eine Verarbeitungsschaltung (1304-RL; 1304-NN; 1304-RM; 1538), wobei die Verarbeitungsschaltung (1304-RL; 1304-NN; 1304-RM; 1538) des UE (100-RL; 100-NN; 100-RM; 1300-RL; 1300-NN; 1300-RM; 1491; 1492; 1530) konfiguriert ist, um die Schritte gemäß einem der Ansprüche 1 bis 8 oder 9 bis 12 auszuführen.

## Revendications

1. Un procédé (200-TX) de protection de l'intégrité d'un en-tête d'une unité de données, DU, au niveau d'une couche d'adaptation pour une communication radio relayée entre un dispositif radio distant (100-RM) et un réseau d'accès radio, RAN (100-NN), ou un autre dispositif radio (100-RM) par l'intermédiaire d'un dispositif radio relais (100-RL), le procédé (200-TX) comprenant ou amorçant les étapes :
d'obtention (206-TX), au niveau d'un transmetteur, TX (100-TX), d'une DU à partir d'une couche transparente, la communication radio relayée utilisant une pile de protocoles comprenant la couche d'adaptation en dessous de la couche transparente qui est relayée de manière transparente au niveau du dispositif radio relais (100-RL) ;
de protection (208-TX), au niveau de la couche d'adaptation du TX (100-TX), de l'intégrité de l'en-tête de la DU en incluant un jeton dans l'en-tête de la DU au niveau de la couche d'adaptation, le jeton comprenant un identifiant, ID, temporaire local du dispositif radio distant (100-RM) alloué avec l'ID temporaire local par une station de base du RAN (100-NN), l'en-tête à intégrité protégée étant attaché à la DU obtenue (206-TX) à partir de la couche transparente ; et
de transmission (212-TX), à partir du TX (100-TX), de la DU comprenant l'en-tête à intégrité protégée vers un récepteur, RX (100-RX).

2. Le procédé (200-TX) de la revendication 1, dans lequel au moins un élément parmi la protection d'intégrité (208-TX), l'en-tête à intégrité protégée, et le jeton possède une validité limitée et/ou est valide pour au moins un élément parmi :
une période de temps prédéfinie ;
un nombre prédéfini d'en-têtes à intégrité protégée de DU au niveau de la couche d'adaptation ; et
un nombre prédéfini de transmissions d'une ou de plusieurs DU, facultativement le nombre prédéfini de transmissions d'une ou de plusieurs DU comprenant uniquement des transmissions initiales.

3. Le procédé (200-TX) de l'une quelconque des revendications 1 à 2, dans lequel la protection d'intégrité (208-TX) est configurée par une unité centrale de la communication radio relayée, du RAN (100-NN) ou de l'autre dispositif radio (100-RM) ; et/ou
dans lequel le jeton est configuré par le RAN (100-NN), facultativement par une station de base (100-NN) du RAN ; et/ou
dans lequel le jeton est configuré par un dispositif radio coordinateur, qui est un nœud de dispositif radio faisant fonctionner un coordinateur à proximité ; et/ou
dans lequel le jeton est configuré par un serveur d'application (1430 ; 1510).

4. Le procédé (200-TX) de l'une quelconque des revendications 1 à 3, dans lequel l'ID temporaire local n'est appliqué que pour une transmission (212-TX), et dans lequel pour une transmission suivante (212-TX), le TX (100-TX) doit passer à un ID temporaire différent ; et/ou
dans lequel l'ID temporaire local n'est appliqué que pour toutes les N transmissions (212-TX), et dans lequel après N transmissions (212-TX), le TX (100-TX) doit passer à un ID temporaire différent ; et/ou
dans lequel l'ID temporaire local n'est appliqué que jusqu'à ce qu'un ID permanent ne soit reçu ; et/ou
dans lequel la couche transparente comprend une couche de protocole de convergence de données en paquets, PDCP ; et/ou
dans lequel la DU comprend une unité de données en paquets, PDU.

5. Le procédé (200-TX) de l'une quelconque des revendications 1 à 4, en outre comprenant ou amorçant l'étape :
de transmission (204-TX), à partir du TX (100-TX) vers le RX (100-RX), d'un message de configuration,
facultativement dans lequel le message de configuration est indicatif d'au moins un élément parmi une configuration de la protection (208-TX) et un ou plusieurs paramètres de la protection (208-TX), et/ou
facultativement dans lequel le message de configuration est indicatif du fait que la couche d'adaptation du TX (100-TX) est apte à réaliser la protection (208-TX), et/ou facultativement dans lequel le message de configuration comprend ou est indicatif du jeton ; et/ou
en outre comprenant ou amorçant, de préférence au niveau de la couche d'adaptation :
la génération du jeton sur la base d'au moins un élément parmi l'ID temporaire local du TX (100-TX), et l'ID temporaire local du RX (100-RX) ; et/ou
dans lequel le jeton est une valeur de hachage d'au moins un élément parmi l'ID temporaire local du TX (100-TX), et l'ID temporaire local du RX (100-RX).

6. Le procédé (200-TX) de l'une quelconque des revendications 1 à 5, dans lequel le jeton comprend en outre au moins un élément parmi :
un numéro de séquence de la DU au niveau de la couche d'adaptation ;
une identité de support radio, RB ;
une direction de transmission de la DU ; et
une clé de protection d'intégrité.

7. Le procédé (200-TX) de l'une quelconque des revendications 1 à 6, en outre comprenant ou amorçant l'étape :
de réception (202-TX), au niveau du TX (100-TX) en provenance du RX (100-RX), d'un message de configuration,
facultativement dans lequel le message de configuration est indicatif d'au moins un élément parmi une configuration de la protection (208-TX) et/ou un ou plusieurs paramètres de la protection (208-TX), et/ou
facultativement dans lequel le message de configuration est indicatif du fait qu'une couche d'adaptation du RX (100-RX) est apte à valider (216-RX) au moins un élément parmi le jeton, l'en-tête et la DU.

8. Le procédé (200-TX) de l'une quelconque des revendications 1 à 7, le procédé (200-TX) étant réalisé par le dispositif radio distant (100-RM) en tant que TX (100-TX).

9. Un procédé (200-RX) de validation de l'intégrité d'un en-tête d'une unité de données, DU, au niveau d'une couche d'adaptation pour une communication radio relayée entre un dispositif radio distant (100-RM) et un réseau d'accès radio, RAN (100-NN), ou un autre dispositif radio (100-RM) par l'intermédiaire d'un dispositif radio relais (100-RL), le procédé (200-RX) comprenant ou amorçant les étapes :
de réception (212-RX), en provenance d'un transmetteur, TX (100-TX), de la DU comprenant un en-tête à intégrité protégée au niveau d'un récepteur, RX (100-RX), l'en-tête à intégrité protégée incluant un jeton dans l'en-tête de la DU au niveau de la couche d'adaptation, le jeton comprenant un identifiant, ID, temporaire local du dispositif radio distant (100-RM) alloué avec l'ID temporaire local par une station de base du RAN (100-NN) ;
de validation (216-RX), au niveau de la couche d'adaptation du RX (100-RX), de l'intégrité de l'en-tête à intégrité protégée de la DU, l'en-tête à intégrité protégée étant détaché de la DU reçue (212-RX) en provenance du TX (100-TX) ; et
de fourniture (218-RX), au niveau du RX (100-RX), de la DU à une couche transparente, la communication radio relayée utilisant une pile de protocoles comprenant la couche d'adaptation en dessous de la couche transparente qui est relayée de manière transparente au niveau du dispositif radio relais (100-RL).

10. Le procédé (200-RX) de la revendication 9, dans lequel au moins une des étapes de fourniture et de détachement est réalisée sélectivement, facultativement en réponse à un résultat de la validation, si le résultat est indicatif de la validité de l'en-tête ; et/ou en outre comprenant ou amorçant l'étape :
de rejet (218-RX) de la DU si la validation (214-RX) est négative.

11. Le procédé (200-RX) de la revendication 9 ou de la revendication 10, en outre comprenant ou amorçant l'étape :
de réception (202-RX), en provenance du TX (100-TX) au niveau du RX (100-RX), d'un message de configuration,
facultativement dans lequel le message de configuration est indicatif d'au moins un élément parmi une configuration de la validation (216-RX) et/ou un ou plusieurs paramètres de la validation (216-RX), et/ou
facultativement dans lequel le message de configuration est indicatif du fait que la couche d'adaptation du TX (100-TX) est apte à réaliser la protection (208-TX) ; et/ou en outre comprenant ou amorçant l'étape :
de transmission (204-TX), à partir du RX (100-RX) vers le TX (100-TX), d'un message de configuration,
facultativement dans lequel le message de configuration est indicatif d'au moins un élément parmi une configuration de la validation (216-RX) et/ou un ou plusieurs paramètres de la validation (216-RX), et/ou
facultativement dans lequel le message de configuration est indicatif du fait qu'une couche d'adaptation du RX (100-RX) est apte à valider (216-RX) au moins un élément parmi le jeton, l'en-tête et la DU ; et/ou
dans lequel la validation comprend ou amorce :
la comparaison d'un jeton configuré et d'un jeton inclus dans l'en-tête.

12. Le procédé (200-RX) de l'une quelconque des revendications 9 à 11, en outre comprenant ou amorçant les étapes et/ou caractéristiques de l'une quelconque des revendications 2 à 8, ou des étapes et/ou caractéristiques correspondant à celles-ci.

13. Un dispositif (100-TX) pour la protection de l'intégrité d'un en-tête d'une unité de données, DU, au niveau d'une couche d'adaptation pour une communication radio relayée entre un dispositif radio distant (100-RM) et un réseau d'accès radio, RAN (100-NN), ou un autre dispositif radio (100-RM) par l'intermédiaire d'un dispositif radio relais (100-RL), le dispositif (100-TX) étant configuré pour :
obtenir, au niveau d'un transmetteur, TX (100-TX), une DU à partir d'une couche transparente, dans lequel la communication radio relayée utilise une pile de protocoles comprenant la couche d'adaptation en dessous de la couche transparente qui est relayée de manière transparente au niveau du dispositif radio relais (100-RL) ;
protéger, au niveau de la couche d'adaptation du TX (100-TX), l'intégrité de l'en-tête de la DU en incluant un jeton dans l'en-tête de la DU au niveau de la couche d'adaptation, le jeton comprenant un identifiant, ID, temporaire local du dispositif radio distant (100-RM) alloué avec l'ID temporaire local par une station de base du RAN (100-NN), dans lequel l'en-tête à intégrité protégée est attaché à la DU obtenue (206-TX) à partir de la couche transparente ; et
transmettre, à partir du TX (100-TX), la DU comprenant l'en-tête à intégrité protégée vers un récepteur, RX (100-RX).

14. Le dispositif (100-TX) de la revendication 13, configuré en outre pour réaliser les étapes de l'une quelconque des revendications 2 à 8.

15. Un dispositif (100-RX) pour la validation de l'intégrité d'un en-tête d'une unité de données, DU, au niveau d'une couche d'adaptation pour une communication radio relayée entre un dispositif radio distant (100-RM) et un réseau d'accès radio, RAN (100-NN), ou un autre dispositif radio (100-RM) par l'intermédiaire d'un dispositif radio relais (100-RL), le dispositif (100-RX) étant configuré pour :
recevoir, en provenance d'un transmetteur, TX (100-TX), la DU comprenant un en-tête à intégrité protégée au niveau d'un récepteur, RX (100-RX), l'en-tête à intégrité protégée incluant un jeton dans l'en-tête de la DU au niveau de la couche d'adaptation, le jeton comprenant un identifiant, ID, temporaire local du dispositif radio distant (100-RM) alloué avec l'ID temporaire local par une station de base du RAN (100-NN) ;
valider, au niveau de la couche d'adaptation du RX (100-RX), l'intégrité de l'en-tête à intégrité protégée de la DU, l'en-tête à intégrité protégée étant détaché de la DU reçue (212-RX) en provenance du TX (100-TX) ; et
fournir, au niveau du RX (100-RX), la DU à une couche transparente, la communication radio relayée utilisant une pile de protocoles comprenant la couche d'adaptation en dessous de la couche transparente qui est relayée de manière transparente au niveau du dispositif radio relais (100-RL).

16. Le dispositif (100-RX) de la revendication 15, configuré en outre pour réaliser les étapes des revendications 10 à 12.

17. Un système de communication (300 ; 1400 ; 1500) incluant un ordinateur hôte (1430 ; 1510) comprenant :
une circuiterie de traitement (1518) configurée pour fournir des données utilisateur ; et
une interface de communication (1516) configurée pour réacheminer des données utilisateur vers un réseau radio cellulaire ou ad hoc (1450 ; 1550) pour transmission à un équipement utilisateur, UE, (100-RL ; 100-NN ; 100-RM ; 1300-RL ; 1300-NN ; 1300-RM ; 1491 ; 1492 ; 1530) dans lequel l'UE (100-RL ; 100-NN ; 100-RM ; 1300-RL ; 1300-NN ; 1300-RM ; 1491 ; 1492 ; 1530) comprend une interface radio (1302-RL ; 1302-NN ; 1302-RM ; 1537) et une circuiterie de traitement (1304-RL ; 1304-NN ; 1304-RM ; 1538), la circuiterie de traitement (1304-RL ; 1304-NN ; 1304-RM ; 1538) de l'UE (100-RL ; 100-NN ; 100-RM ; 1300-RL ; 1300-NN ; 1300-RM ; 1491 ; 1492 ; 1530) étant configurée pour exécuter les étapes de l'une quelconque des revendications 1 à 8 ou 9 à 12.
